# EUROPÄISCHE PATENTSCHRIFT

(11) **EP 3 135 823 B1**
(45) Veröffentlichungstag und Bekanntmachung des Hinweises auf die Patenterteilung: **02.12.2020**
(21) Anmeldenummer: 16180881.1
(22) Anmeldetag: 22.07.2016
(51) Int. Cl.: E02F 9/02, E01C 23/088, E02F 9/26

(54) **SELBSTFAHRENDE FRONT- ODER HECKLADER BAUMASCHINE UND VERFAHREN ZUR ANZEIGE DER UMGEBUNG EINER SELBSTFAHRENDEN FRONT- ODER HECKLADER BAUMASCHINE**
SELF-PROPELLED FRONT- OR REARLOADER CONSTRUCTION MACHINE AND METHOD FOR DISPLAYING THE AREA SURROUNDING SAME
ENGIN AUTOMOBILE ET PROCEDE D'AFFICHAGE DE L'ENVIRONNEMENT D'UN CHARGEUR FRONTAL OU ARRIERE

(30) Priorität: 05.08.2015 DE 102015010009
(43) Veröffentlichungstag der Anmeldung: 01.03.2017
(73) Patentinhaber: Wirtgen GmbH, 53578 Windhagen (DE)
(72) Erfinder: Kröll, Harald, 53572 Unkel (DE); Lange, Herbert, 51491 Overath (DE); Lenz, Martin, 56276 Großmaischeid (DE); Barimani, Cyrus, 53639 Königswinter (DE); Hähn, Günter, 53639 Königswinter (DE)
(74) Vertreter: Oppermann, Frank

(56) Entgegenhaltungen:
- US-A1- 2008 143 835
- US-A1- 2012 127 310
- US-A1- 2015 009 329

## Beschreibung

Die Erfindung betrifft eine selbstfahrende Frontlader-Baumaschine und Hecklader-Baumaschine, insbesondere Straßenfräsmaschine, Recycler oder Surface-Miner, die eine Bildanzeigeeinrichtung zur Anzeige eines Bildes der Umgebung der Baumaschine aufweist. Darüber hinaus betrifft die Erfindung ein Verfahren zur Anzeige eines Bildes der Umgebung einer selbstfahrenden Frontlader-Baumaschine und Hecklader-Baumaschine. Die bekannten Baumaschinen verfügen über einen Maschinenrahmen, der von einem Fahrwerk getragen wird, das vordere und hintere Laufwerke aufweist, und eine am Maschinenrahmen angeordnete Arbeitseinrichtung zur Bearbeitung des Bodens, beispielsweise zum Abtragen schadhafter Straßenschichten (Straßenfräsmaschine), Vorbereiten des Bodens für den Straßenbau oder Wiederaufbereitung bestehender Straßenbeläge (Stabilisierer, Recycler) oder Abbau von Bodenschätzen (Surface-Miner). Die Arbeitseinrichtung kann eine Fräs- und/oder Schneidwalze aufweisen. Den einzelnen Laufwerken der Baumaschine sind Hubeinrichtungen zugeordnet, die jeweils ein- bzw. ausgefahren werden können, so dass der Maschinenrahmen zusammen mit der Arbeitseinrichtung gegenüber der Bodenoberfläche abgesenkt bzw. angehoben oder in seiner Neigung zur Bodenoberfläche ausgerichtet werden kann.

Während des Einsatzes einer Baumaschine kann sich die Höhe und Ausrichtung des Maschinenrahmens gegenüber der Bodenoberfläche verändern. Zur Bearbeitung des Bodens kann der Maschinenrahmen abgesenkt werden, so dass die Arbeitswalze der Arbeitseinrichtung mit dem Boden in Eingriff ist, während zum Umsetzen oder Transport der Baumaschine der Maschinenrahmen angehoben werden kann, so dass die Arbeitswalze in einem ausreichenden Abstand zum Boden angeordnet ist. Bei den bekannten Baumaschinen kann der Maschinenrahmen auch stark nach vorne- bzw. hinten und/oder zur Seite geneigt werden.

Für den Maschinenführer stellt sich das Problem, dass die Umgebung der Baumaschine vom Fahrstand aus nur beschränkt einsehbar ist. Bei Straßenfräsmaschinen beispielsweise kommt erschwerend hinzu, dass die Sicht des Maschinenführers noch durch die weit ausladende Transporteinrichtung beschränkt wird, die sich bei Frontlader-Straßenfräsmaschinen in Arbeitsrichtung nach vorne und bei Hecklader-Straßenfräsmaschinen nach hinten erstreckt. Folglich kann der Fahrer einer Straßenfräsmaschine Objekte vom Fahrstand aus nicht erkennen, die im Sichtbereich des Maschinenführers von der Transporteinrichtung verdeckt werden. In Abhängigkeit von der Position des Fahrers auf dem sich über die gesamte Breite der Maschine erstreckenden Fahrstand und dem großen Schwenk- und Neigungswinkels der Transporteinrichtung können nicht nur unterhalb, sondern auch neben oder vor der Transporteinrichtung befindliche Objekte verdeckt sein.

Wegen der beschränkten Sicht sind Baumaschinen bekannt, die mit einer oder mehreren Kameras ausgestattet sind. Bekannte Straßenfräsmaschinen verfügen beispielsweise über eine Kamera, die ein Bild von einem rückwärtigen Bereich der Baumaschine aufnimmt, das auf einer am Fahrstand angeordneten Anzeigeeinheit angezeigt wird. Dadurch wird für den Maschinenführer das Zurücksetzen der Fräsmaschine erleichtert.

Die DE 10 2013 002 079 A1 beschreibt einen Bagger, der über mehrere Überwachungskameras verfügt, die an unterschiedlichen Seiten des Maschinenrahmens in unterschiedlicher Höhe über der Bodenoberfläche angeordnet sind. Die einzelnen Kameras, die an dem Maschinenrahmen zur Justierung verschiebbar oder drehbar montiert sein können, nehmen Teilbilder der Umgebung auf, die mittels einer Bildverarbeitung zu einem Gesamtbild eines bestimmten Bereiches der Umgebung zusammengefügt werden.

Für Kraftfahrzeuge, insbesondere Personenkraftfahrzeuge, sind Vorrichtungen bekannt, die den Fahrer beim Einparken des Fahrzeugs unterstützten. Derartige Vorrichtungen werden auch als Fahrerassistenzsysteme bezeichnet, die dem Fahrer des Kraftfahrzeuges ein lückenloses Bild der Fahrzeugumgebung aus einem virtuellen Sichtpunkt liefern, der oberhalb des Fahrzeugs liegt. Eine derartige Rundumansicht der Umgebung (surroundview) wird auch als eine Ansicht in der Vogelperspektive (bird-view) bezeichnet.

Die DE 10 2011 077 143 A1 beschreibt ein Fahrerassistenzsystem für Kraftfahrzeuge, das über eine Frontkamera im Kühlergrill, jeweils eine Seitenkamera in den beiden Außenspiegeln und eine Heckkamera am Fahrzeugheck im Bereich der Griffmulde des Kofferraumdeckels verfügt. Die Frontkamera nimmt einen vorderen Bildbereich und die Heckkamera einen hinteren Bildbereich auf, während die Seitenkameras seitliche Bildbereiche aufnehmen, die mit einem geeigneten Abbildungsmodell zu einem sich aus vier Bildausschnitten zusammensetzenden Gesamtbild transformiert werden. Eine lückenlose Abdeckung des gesamten Fahrzeugumfeldes soll dadurch erreicht werden, dass die Kameras mit einer Optik ausgestattet sind, die einen horizontalen Öffnungswinkel von mehr als 180° ermöglicht (fish-eye Optik), so dass sich die einzelnen Bildbereiche einander überlappen.

Die DE 10 2011 088 332 A1 beschreibt ein Verfahren zur Verbesserung der Objekterfassung bei Multikamerasystemen für Kraftfahrzeuge. Die Druckschrift befasst sich mit dem Problem der Erfassung von erhabenen Objekten in kritischen Bereichen eines Gesamtbildes in der Vogelperspektive. Das Verfahren sieht die Aufnahme von einem vorderen und hinteren und zwei seitlichen Sichtbereichen vor, die zu einem Gesamtbild in der Vogelperspektive zusammengefügt werden. Die für die Objekterfassung kritischen Bereiche sollen im Bereich der Nahtstellen (Stitching) liegen. Während bei den gängigen Systemen eine festimplementierte und nicht änderbare Nahstelle innerhalb des Überlappungsbereichs der Bilder definiert wird, sieht das bekannte Verfahren eine Verschiebung der Nahtstelle derart vor, dass die Nahstelle nicht im Bereich erhabener Objekte liegt. Dadurch soll vermieden werden, dass Objekte in dem für die Objekterfassung kritischen Bereich der Nahtstelle liegen.

Ein Verfahren zum Zusammenfügen mehrerer Bildaufnahmen zu einem Gesamtbild in der Vogelperspektive ist auch aus der DE 10 2006 003 538 B3 bekannt. Neben dem Einsatz in Personenkraftwagen soll sich das bekannte Verfahren auch für den Einsatz in Lastkraftwagen, Omnibussen oder Baufahrzeugen eigenen.

Die DE 2014 013 155 A1 beschreibt ein Bildanzeigesystem für bewegliche Arbeitsmaschinen wie Lastwagen für den Erdtransport, Radlager oder Bagger, das die Erkennung von im eingeschränkten Sichtfeld des Fahrzeugführers befindlichen Objekten erlaubt. Das Bildanzeigesystem sieht auch eine Ansicht in der Vogelperspektive vor. Die Art der Darstellung ist von einem bestimmten Zustand der Arbeitsmaschine abhängig, der von Sensoren erfasst wird. Als Zustand der Arbeitsmaschine wird bei einer bevorzugten Ausführungsform die Bewegungsrichtung und Geschwindigkeit der Arbeitsmaschine erfasst, um die räumliche Beziehung zwischen Maschine und Objekt überwachen zu können. Beispielsweise soll ein Objekt nicht angezeigt werden, wenn sich dieses außerhalb des Bewegungsbereichs der Maschine befindet,

Aus der US 2015/009329 A1 ist ein Bagger mit vorderen und hinteren Kettenlaufwerken bekannt, der über ein Kamerasystem mit mehreren Kamers zur Aufnahme von einzelnen sich überlappenden Bildbereichen der Umgebung aus unterschiedlichen Bildaufnahmepositionen verfügt. Die einzelnen Bildausschnitte der unterschiedlichen Bildbereiche werden zu einem Gesamtbild in der Vogelperspektive zusammengefügt. Die US 2015/009329 A1 befasst sich mit der Höhe der Kameras bzw. des Maschinenrahmens gegenüber dem Boden. Die Berechnung der Bildausschnitte erfolgt unter Berücksichtigung der Höhe jeder Kamera über der Bodenoberfläche. Wenn sich die Höhe des Maschinenrahmens gegenüber dem Boden ändert, verändert sich auch der Bildausschnitt.

Obwohl sich im druckschriftlichen Stand der Technik vereinzelte Hinweise auf die Verwendung der bekannten Fahrerassistenzsystem auch bei Baumaschinen finden lassen, werden die bekannten vorzugsweise für Personen- oder Lastkraftwagen bestimmten Fahrerassistenzsysteme aber den besonderen Anforderungen, die selbstfahrende Baumaschinen mit einem in der Höhe und/oder Neigung verstellbaren Maschinenrahmen, insbesondere Straßenfräsmaschine, Stabilisierer, Recycler und Surface-Miner, an Fahrerassistenzsysteme stellen, im Allgemeinen nicht gerecht, da sich diese Baumaschinen von Kraftfahrzeugen insofern grundlegend voneinander unterscheiden, als ein Kraftfahrzeug nicht über eine Arbeitseinrichtung verfügt, die an einem Maschinenrahmen angeordnet ist, dessen Höhe und/oder Neigung gegenüber der Bodenoberfläche verändert werden kann.

Der Erfindung liegt die Aufgabe zugrunde, eine selbstfahrende Baumaschine mit einem in der Höhe und/oder Neigung verstellbaren Maschinenrahmen, insbesondere Straßenfräsmaschine, Recycler und Surface-Miner, zu schaffen, die dem Maschinenführer einen hohen Bedienkomfort bietet. Darüber hinaus ist eine Aufgabe der Erfindung, ein Verfahren zur Verbesserung des Bedienkomforts anzugeben.

Die Lösung dieser Aufgaben erfolgt mit den Merkmalen der unabhängigen Patentansprüche. Die abhängigen Ansprüche betreffen vorteilhafte Ausführungsformen der Erfindung.

Die erfindungsgemäße Baumaschine verfügt über eine Bildanzeigeeinrichtung zur Anzeige eines Bildes der Umgebung der Baumaschine in der Vogelperspektive, die ein Kamerasystem mit mehreren am Maschinenrahmen vorgesehenen Kameras zur Aufnahme von einzelnen sich überlappenden Bildbereichen der Baumaschinenumgebung aus unterschiedlichen Bildaufnahmepositionen und ein Bildverarbeitungssystem aufweist. Das Bildverarbeitungssystem ist derart ausgebildet, dass Bildausschnitte der einzelnen Bildbereiche zu einem Gesamtbild in der Vogelperspektive zusammengefügt werden. Hierzu weist die Baumaschine eine die Höhe und/oder die Neigung des Maschinenrahmens gegenüber der Bodenoberfläche erfassende Lageerfassungs-Einrichtung auf. Die Neigung des Maschinenrahmens gegenüber der Bodenoberfläche ist von der Neigung gegenüber der Horizontalen zu unterscheiden. Für die Erfindung ist unerheblich, wie die Lage des Maschinenrahmens gegenüber der Bodenoberfläche erfasst wird. Daher können sämtliche bekannten Einrichtungen und Verfahren zur Lageerfassung Verwendung finden.

Die erfindungsgemäße Baumaschine zeichnet sich dadurch aus, dass das Bildverarbeitungssystem mit der Lageerfassungs-Einrichtung derart zusammenwirkt, dass beim Zusammenfügen der Bildausschnitte der einzelnen Bildbereiche zu einem Gesamtbild in der Vogelperspektive der Verlauf der zwischen den Bildausschnitten befindlichen Nähte, die innerhalb der Überlappungsbereiche der Bildbereiche liegen, in Abhängigkeit von der Höhe und/oder der Neigung des Maschinenrahmens gegenüber der Bodenoberfläche festgelegt wird. Die Neigung des Maschinenrahmens kann eine Neigung gegenüber der Bodenoberfläche in einer Richtung quer zur Arbeitsrichtung der Baumaschine und/oder in Längsrichtung der Baumaschine sein. Folglich sieht die Baumaschine nicht die Definition von festimplementierten und nicht änderbaren Nahstellen innerhalb der Überlappungsbereiche der Bildbereiche vor, sondern kann den Zuschnitt der Bildausschnitte an die Lage des Maschinenrahmens gegenüber dem Boden optimal anpassen. Eine lückenlose und eindeutige Rundumsicht ist für den Maschinenführer daher sogar dann gewährleistet, wenn die Baumaschine stark nach vorne bzw. hinten und/oder zur Seite geneigt ist. Auch wird die Veränderung der Höhe des Maschinenrahmens gegenüber der Bodenoberfläche bei der Anzeige der Umgebung der Baumaschine berücksichtigt. Die Festlegung des Verlaufs der Nähte in Abhängigkeit von der Höhe und/oder der Neigung des Maschinenrahmens erlaubt ein relativ einfaches Zusammenfügen der einzelnen Bilder mit einem verhältnismäßig geringen Rechenaufwand, so dass die für die Anzeige des Gesamtbildes erforderlichen Bilddaten in Echtzeit generiert werden können. Die Kompensation der Höhe und/oder Neigung des Maschinenrahmens hat auch den Vorteil, dass Objekte im Bereich der Nahtstellen, die aufgrund von Abbildungsfehlern möglicherweise doppelt oder überhaupt nicht wiedergegeben werden, besser erfasst werden können.

Die Lageerfassungs-Einrichtung ist vorzugsweise derart konfiguriert, dass die Höhe des Maschinenrahmens gegenüber der Bodenoberfläche beschreibende Höhendaten und/oder die Neigung des Maschinenrahmens gegenüber der Bodenoberfläche in einer Richtung quer zur Arbeitsrichtung der Baumaschine beschreibende Querneigungs-Daten und/oder die Neigung des Maschinenrahmens gegenüber der Bodenoberfläche in Längsrichtung der Baumaschine beschreibende Längsneigungs-Daten erzeugt werden.

In diesem Zusammenhang wird unter einer Querneigung eine Drehbewegung um die Längsachse der Baumaschine und unter einer Längsneigung eine Drehbewegung um die Querachse der Baumaschine verstanden. Die Drehbewegung um die Längsachse wird auch als Rollen und die Drehbewegung um die Querachse als Nicken der Baumaschine bezeichnet.

Die Höhen- und Neigungsdaten können aus der Hubstellung der den einzelnen Laufwerken zugeordneten Hubeinrichtungen gewonnen werden. Zur Erfassung der Hubstellung der einzelnen Hubeinrichtungen können Sensoren, beispielsweise Seilzugsensoren, vorgesehen sein. Die Lage des Maschinenrahmens gegenüber dem Boden kann aber auch mit Abstandssensoren, beispielsweise Infrarot- oder Ultraschallabstandssensoren ermittelt werden. Auch ist zur Lagebestimmung die Erfassung der Position eines Kantenschutzes und/oder Niederhalters und/oder Abstreifers einer Baumaschine möglich.

Bei einer Lageänderung des Maschinenrahmens verändern sich die Blickwinkel der am Maschinenrahmen angeordneten Kameras, so dass sich die von den Kameras aufgenommenen Bildbereiche der Umgebung verändern. Eine Veränderung der Höhe bzw. Neigung des Maschinenrahmens führt zu einer Vergrößerung bzw. Verkleinerung des aufgenommenen Bildbereichs, wobei sich die Umrisslinien des Bildbereichs verschieben.

Das Bildverarbeitungssystem ist vorzugsweise derart konfiguriert, dass auf der Basis der Höhendaten und/oder Querneigungs-Daten und/oder Längsneigungs-Daten die Umrisslinien der einzelnen Bildbereiche der Kameras bestimmt werden und auf der Basis der Umrisslinien die Überlappungsbereiche der Bildbereiche bestimmt werden. In Abhängigkeit von der Höhe und/oder Neigung des Maschinenrahmens ergeben sich unterschiedliche Überlappungsbereiche. Die räumliche Lage und Ausdehnung der Überlappungsbereiche bestimmt die Abmessungen der auszuwählenden Bildausschnitte, die zu dem Gesamtbild in der Vogelperspektive zusammengefügt werden. Dadurch wird auch der Verlauf der Nähte zwischen den Bildausschnitten bestimmt.

Das Bildverarbeitungssystem ist derart konfiguriert, dass der Verlauf der Nähte zwischen den Bildausschnitten in Abhängigkeit von der Höhe und/oder Neigung des Maschinenrahmens derart festgelegt wird, dass ein lückenloses und eindeutiges Rundumbild der Baumaschinenumgebung angezeigt wird. Innerhalb der Überlappungsbereiche können die Nähte aber unterschiedlich angeordnet werden. In Abhängigkeit von der Anordnung der Nähte innerhalb der Überlappungsbereiche können sich unterschiedliche Ansichten der Umgebung ergeben. Beispielsweise kann die Ansicht zu einer Seite des Maschinenrahmens auf Kosten der Ansicht nach vorne bzw. hinten erweitert werden. Diesbezüglich können von dem Bildverarbeitungssystem unter bestimmten Kriterien optimale Vorgaben getroffen werden.

Eine bevorzugte Ausführungsform sieht vor, dass das Bildverarbeitungssystem derart konfiguriert ist, dass Bildausschnitte der einzelnen Bildbereiche zu einem rechteckförmigen Gesamtbild in der Vogelperspektive zusammengefügt werden. Diese Darstellung erweist sich für den Maschinenführer als besonders übersichtlich, da Baumaschinen im Allgemeinen ebenfalls einen rechteckförmigen Umriss aufweisen. Es ist aber auch eine nicht rechteckförmige Darstellung der Umgebung möglich. Insbesondere bei dem Einsatz von Kameras, die Objektive mit besonders kleinen Brennweiten und einen besonders großen Aufnahmewinkel haben (Fish-Eye-Objekte), kann ein Gesamtbild in der Vogelperspektive vorteilhaft sein, das zumindest teilweise von runden Umrisslinien begrenzt ist.

Bei einer weiteren Ausführungsform ist das Bildverarbeitungssystem derart konfiguriert ist, dass ein in Bezug auf die Längsseiten und/oder Querseiten des Maschinenrahmens symmetrischer Ausschnitt des Gesamtbildes in der Vogelperspektive angezeigt wird. Dadurch wird verhindert, dass sich die Ansicht der Umgebung mit der Lage des Maschinenrahmens ändert. Für diese Darstellung wird ein in Bezug auf den Maschinenrahmen symmetrischer Ausschnitt aus dem Gesamtbild ausgewählt, in dem die Umgebung der Baumaschine unter Berücksichtigung der maximal möglichen bzw. zu erwartenden Lageänderungen des Maschinenrahmens lückenlos und eindeutig angezeigt wird.

Die Bildanzeigeeinrichtung verfügt vorzugsweise über eine Eingabeeinheit, mit der vom Maschinenführer unterschiedliche Anzeigemodi ausgewählt werden können. Wenn der Maschinenführer beispielsweise einen möglichst weiten Rundumblick haben möchte, kann er einen nicht symmetrischen Anzeigemodus auswählen, oder auf Kosten der erweiterten Rundumsicht eine symmetrische Ansicht mit einem kleineren Ausschnitt.

Die Kameras können am Maschinenrahmen grundsätzlich an unterschiedlichen Stellen angeordnet sein. Von Vorteil wäre, wenn die Blickrichtung der Kameras bei einer Ausrichtung des Maschinenrahmens parallel zur Oberfläche des Bodens orthogonal zur Bodenoberfläche ist. Die Kamera müsste hierzu an einem Ausleger des Maschinenrahmens mit der Blickrichtung auf den Boden angeordnet werden. Ansonsten ist die Orientierung der Kamera auch bei paralleler Ausrichtung des Maschinenrahmens schräg zum Boden. Eine Schrägstellung der Kameraachsen zur Bodenoberfläche führt zwangsläufig zu Verzerrungen bei der Darstellung des Kamerabildes in der rechteckförmigen Bildebene. Diese Verzerrungen können aber mit den bekannten Verfahren der Bildverarbeitung zumindest teilweise ausgeglichen werden.

Für eine nahezu lückenlose Ansicht in der Vogelperspektive sind grundsätzlich vier Kameras ausreichend, die im Frontbereich, Heckbereich und an den Seiten des Maschinenrahmens angeordnet sind. Wenn die Baumaschine beispielsweise eine Straßenfräsmaschine ist, die über eine weit nach vorne oder hinten ausladende Transporteinrichtung verfügt, ist aber eine Bildanzeigeeinrichtung mit fünf Kameras vorteilhaft.

Die erfindungsgemäße Frontlader-Straßenfräsmaschine mit einer Transporteinrichtung an der Vorderseite des Maschinenrahmens weist zwei in Arbeitsrichtung vordere Kameras auf, die zu beiden Seiten der Transporteinrichtung angeordnet sind. Mit den beiden Kameras können zu beiden Seiten der Transporteinrichtung zwei sich in Arbeitsrichtung nach vorne erstreckende Bildbereiche aufgenommen werden, die sich im Bereich der Transporteinrichtung einander überlappen, so dass sich auch die Umgebung im Bereich der Transporteinrichtung abbilden lässt.

Darüber hinaus sind bei einer Frontlader-Straßenfräsmaschine eine linke Kamera an der in Arbeitsrichtung linken Längsseite der Baumaschine und eine rechte Kamera an der in Arbeitsrichtung rechten Längsseite der Baumaschine vorgesehen, so dass ein linker und rechter Bildbereich aufgenommen wird, und eine in Arbeitsrichtung hintere Kamera, so dass ein hinterer Bildbereich aufgenommen wird. An den Längsseiten von besonders langen Baumaschinen können mehrere Kameras vorgesehen sein, beispielsweise eine vordere und hintere Kamera an jeder Längsseite.

Bei der erfindungsgemäßen Hecklader-Baumaschine mit einer Transporteinrichtung in Arbeitsrichtung an der Rückseite des Maschinenrahmens können die Kameras analog zu der Frontlader- Baumaschine angeordnet werden. Das Kamerasystem weist bei einer Hecklader- Baumaschine zwei in Arbeitsrichtung hintere Kameras auf, die zu beiden Seiten der Transporteinrichtung angeordnet sind, so dass zwei hintere Bildbereiche aufgenommen werden, die sich überlappen. Darüber hinaus verfügt das Kamerasystem über eine linke Kamera an der in Arbeitsrichtung linken Längsseite der Baumaschine und eine rechte Kamera an der in Arbeitsrichtung rechten Längsseite der Baumaschine, so dass ein linker und rechter Bildbereich aufgenommen wird, und eine in Arbeitsrichtung vordere Kamera an der Vorderseite des Maschinenrahmens, so dass ein vorderer Bildbereich aufgenommen wird.

Die erfindungsgemäße Baumaschine und das erfindungsgemäße Verfahren sehen vorzugsweise eine Festlegung des Verlaufs der Nähte in Abhängigkeit von der Höhe und Neigung des Maschinenrahmens gegenüber der Bodenoberfläche derart vor, dass bei einer Querneigung des Maschinenrahmens (Rollen) aus einer zu der Bodenoberfläche parallelen Ausrichtung der von den Nähten des linken seitlichen Bildausschnitts und/oder den Nähten des rechten seitlichen Bildausschnitts aufgespannte Öffnungswinkel mit zunehmender Neigung des Maschinenrahmens in Querrichtung auf einer Seite des Maschinenrahmen zunimmt bzw. auf der anderen Seite des Maschinenrahmen abnimmt.

Bei einer Längsneigung des Maschinenrahmens aus einer zu der Bodenoberfläche parallelen Ausrichtung nach hinten bzw. vorne (Nicken) wird der Verlauf der vorderen bzw. hinteren Nähte derart festgelegt, dass mit zunehmender Neigung des Maschinenrahmens in Längsrichtung der von den vorderen Nähten aufgespannte Öffnungswinkel mit zunehmender Neigung des Maschinenrahmens zu- bzw. abnimmt, während der von den hinteren Nähten aufgespannte Öffnungswinkel ab- bzw. zunimmt.

In diesem Zusammenhang wird unter dem Verlauf der Naht die räumliche Anordnung der Naht, d. h. die Linie verstanden, entlang der die Naht verläuft. Die Festlegung des Verlaufs der Nähte kann mit den bekannten Algorithmen erfolgen, die eine Verschiebung der Nahtlinie in Abhängigkeit von den geometrischen Verhältnissen berechnen, die sich bei einer bestimmten Höhe und/oder Neigung des Maschinenrahmens gegenüber der Bodenoberfläche ergeben.

Im Folgenden werden mehrerer Ausführungsbeispiele der Erfindung unter Bezugnahme auf die Figuren im Einzelnen erläutert.

Es zeigen:
- Fig. 1: ein Ausführungsbeispiel einer selbstfahrenden Baumaschine in der Seitenansicht,
- Fig. 2: die Baumaschine von Fig. 1 in der Draufsicht,
- Fig. 3: die für die Erfindung wesentlichen Komponenten der Bildanzeigeeinrichtung der erfindungsgemäßen Baumaschine in vereinfachter schematischer Darstellung,
- Fig. 4: die von den Kameras der Bildanzeigeeinrichtung aufgenommenen Bildbereiche in vereinfachter schematischer Darstellung, wobei sich die Baumaschine in der untersten Position befindet,
- Fig. 5: die von den Kameras aufgenommenen Bildbereiche, wobei sich die Baumaschine in der obersten Position befindet,
- Fig.6: die von den Kameras aufgenommenen Bildbereiche, wobei die Baumaschine zu der linken Seite geneigt ist,
- Fig. 7: die von den Kameras aufgenommenen Bildbereiche, wobei die Baumaschine nach hinten geneigt ist,
- Fig. 8A bis Fig. 8D: der Blickwinkel einer Kamera der Bildanzeigeeinrichtung für unterschiedliche Kamerapositionen
- Fig. 9: die Baumaschine von Fig. 4, wobei die Nähte und Bildausschnitte dargestellt sind,
- Fig. 10: die Baumaschine von Fig. 5, wobei die Nähte und Bildausschnitte dargestellt sind,
- Fig. 11: die Baumaschine von Fig. 6, wobei die Nähte und Bildausschnitte dargestellt sind, und
- Fig. 12: die Baumaschine von Fig. 7, wobei die Nähte und Bildausschnitte dargestellt sind.

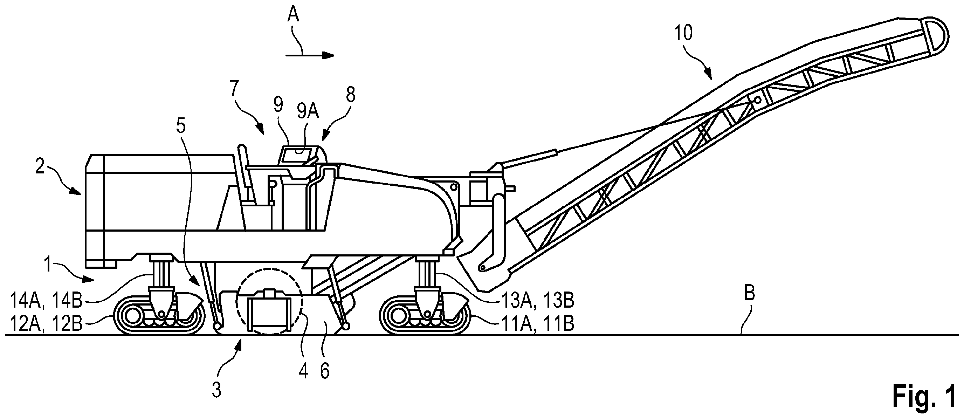

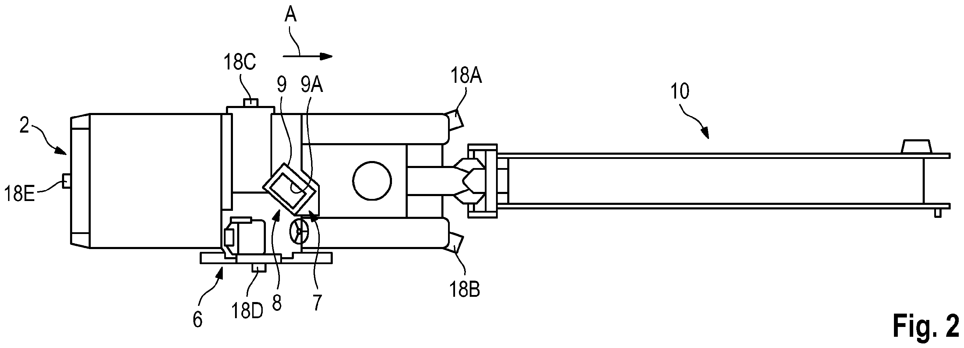

Die Figuren 1 und 2 zeigen in der Seiten- und Draufsicht als Beispiel für eine selbstfahrende Baumaschine eine Straßenfräsmaschine zum Abfräsen von Straßenbelägen, bei der es um eine Frontlader-Straßenfräsmaschine handelt. Die Baumaschine verfügt über einen von einem Fahrwerk 1 getragenen Maschinenrahmen 2, an dem eine Arbeitseinrichtung 3 angeordnet ist. Die Arbeitseinrichtung 3 weist eine Arbeitswalze auf, bei der es sich um eine Fräswalze handelt. Die in Fig. 1 nur andeutungsweise dargestellte Fräswalze 4 ist in einem Fräswalzengehäuse 5 angeordnet. An der in Arbeitsrichtung A linken und rechten Seite ist das Fräswalzengehäuse 5 von einem Kantenschutz 6 verschlossen. An der in Arbeitsrichtung A vorderen Seite ist das Fräswalzengehäuse 5 von einem Niederhalter und an der hinteren Seite von einem Abstreifer verschlossen, die in Fig. 1 nicht erkennbar sind. Oberhalb des Fräswalzengehäuses 5 befindet sich am Maschinenrahmen der Fahrstand 7 mit einem Bedienpult 8 für den Maschinenführer. Am Bedienpult 8 befindet sich eine Anzeigeeinheit 9 mit einem Display 9A. Das abgefräste Fräsgut wird mit einer sich in Arbeitsrichtung A nach vorne erstreckenden Fördereinrichtung 10 abgeführt, die in vertikaler und horizontaler Ebene schwenkbar an der Vorderseite des Maschinenrahmens 2 angeordnet ist.

Die Baumaschine weist in Arbeitsrichtung A ein vorderes linkes Laufwerk 11A und ein vorderes rechtes Laufwerk 11B und ein hinteres linkes Laufwerk 12A und ein hinteres rechtes Laufwerk 12B auf, denen eine in Arbeitsrichtung A vordere, linke und rechte Hubeinrichtung 13 A,B und eine hintere, linke und rechte Hubeinrichtung 14 A,B zugeordnet sind, so dass durch Einfahren bzw. Ausfahren der Hubeinrichtungen die Höhe und Neigung des Maschinenrahmens 2 gegenüber der Bodenoberfläche B verändert werden kann. Die Laufwerke der Baumaschine können sowohl Kettenlaufwerke als auch Räder sein. Mit der Höhenverstellung des Maschinenrahmens 2 verstellt sich auch die Position des auf dem Boden schwimmend aufliegenden Kantenschutzes sowie des Niederhalters und des Abstreifers relativ zum Maschinenrahmen, die beweglich am Maschinenrahmen angeordnet sind.

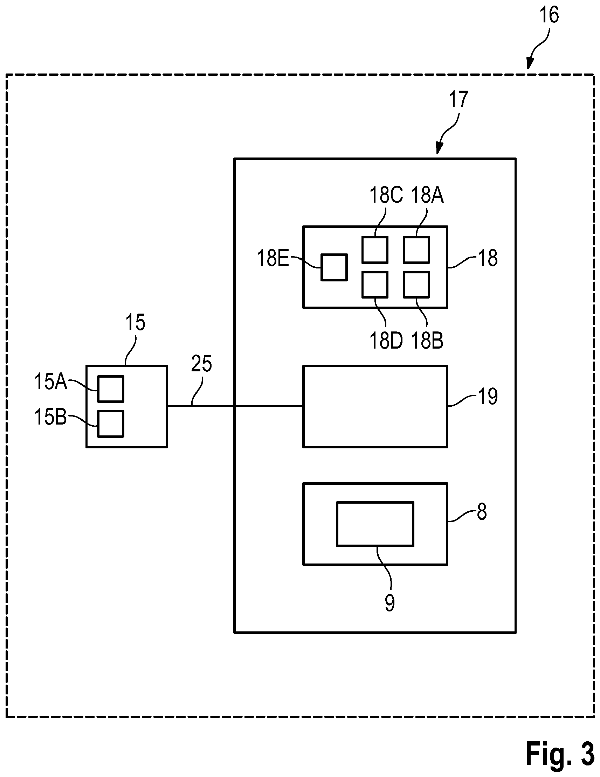

Fig. 3 zeigt die für die Erfindung wesentlichen Komponenten der erfindungsgemäßen Baumaschine in vereinfachter schematischer Darstellung. Die Baumaschine weist eine Lageerfassungs-Einrichtung 15 zur Erfassung der Höhe und/oder Neigung des Maschinenrahmens 2 gegenüber der Bodenoberfläche B auf, die Bestandteil einer zentralen Steuer- und Recheneinheit 16 der Baumaschine sein kann. Die Lage des Maschinenrahmens 2 kann aus Daten berechnet werden, die aus der Hubstellung der Hubeinrichtungen 13 A,B und 14 A,B und/oder der Position des Kantenschutzes, Niederhalters oder Abstreifers gewonnen werden. Die Positionen der einzelnen Aggregate können mit geeigneten Sensoren erfasst werden.

Die Lageerfassungs-Einrichtung 15 weist ein Recheneinheit 15A auf, die die Daten der Sensoren 15B empfängt. Die Recheneinheit 15A ist derart konfiguriert, dass aus den Daten der Sensoren die Höhe und Neigung des Maschinenrahmens 2 gegenüber der Bodenoberfläche B bestimmt wird.

Bei dem vorliegenden Ausführungsbeispiel ist die Lageerfassungs-Einrichtung 15 derart konfiguriert, dass aus der mit den Sensoren 15B, beispielsweise mit Seilzugsensoren, erfassten Hubstellung der Hubeinrichtungen 13 A,B und 14 A,B die Höhe des Maschinenrahmens 2 gegenüber der Bodenoberfläche B und die Neigung des Maschinenrahmens gegenüber der Bodenoberfläche in einer Richtung quer zur Arbeitsrichtung der Baumaschine (Rollen) und die Neigung des Maschinenrahmens in Längsrichtung der Baumaschine (Nicken) berechnet werden. Die Lageerfassungs-Einrichtung 15 erzeugt entsprechende Höhen-, Querneigungs- und Längsneigungs-Daten. Darüber hinaus verfügt die Baumaschine über eine Bildanzeigeeinrichtung 17 zur Anzeige eines Bildes der Umgebung der Baumaschine in der Vogelperspektive, die ein Kamerasystem 18 und ein Bildverarbeitungssystem 19 aufweist. Die Anzeige des Bildes erfolgt auf dem Display 9A der Anzeigeeinheit 9 am Fahrstand 7 im Sichtfeld des Maschinenführers.

Nachfolgend werden der Aufbau und die Funktion der Bildanzeigeeinrichtung 16 im Einzelnen beschrieben.

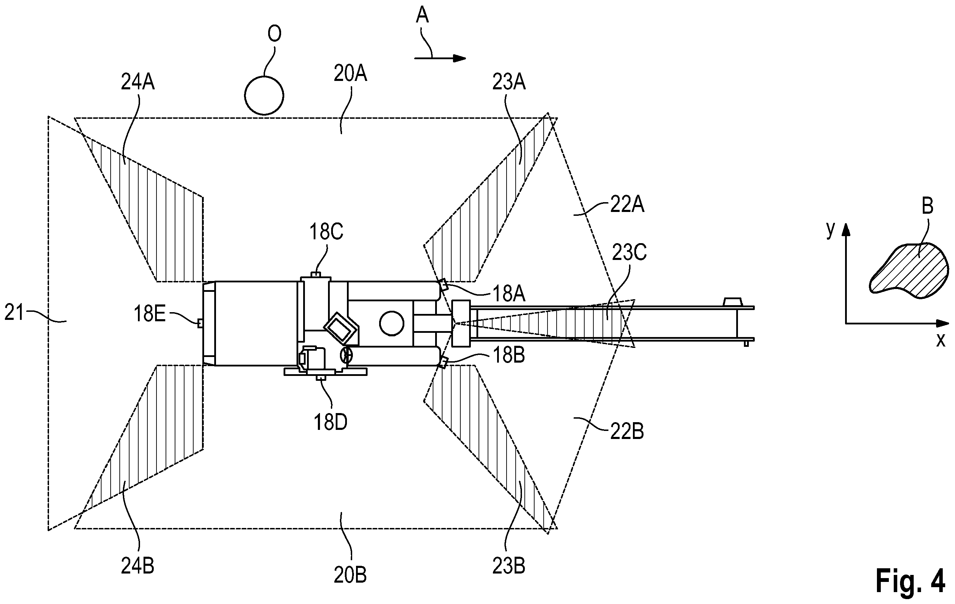

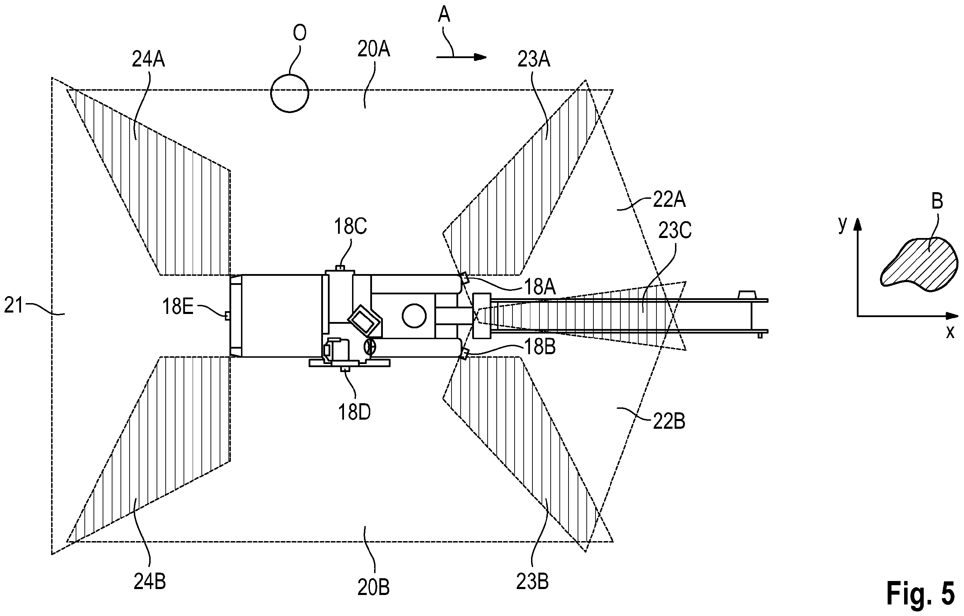

Fig. 4 zeigt die Baumaschine in paralleler Ausrichtung zur Bodenoberfläche B, wobei sämtliche Hubeinrichtungen 13 A,B und 14 A,B vollständig eingefahren und der Maschinenrahmen 2 in die unterste Position abgesenkt ist, und Fig. 5 zeigt die Baumaschine in paralleler Ausrichtung zur Bodenoberfläche B, wobei sämtliche Hubeinrichtungen 13 A,B und 14 A,B vollständig ausgefahren und der Maschinenrahmen 2 in die oberste Position angehoben ist.

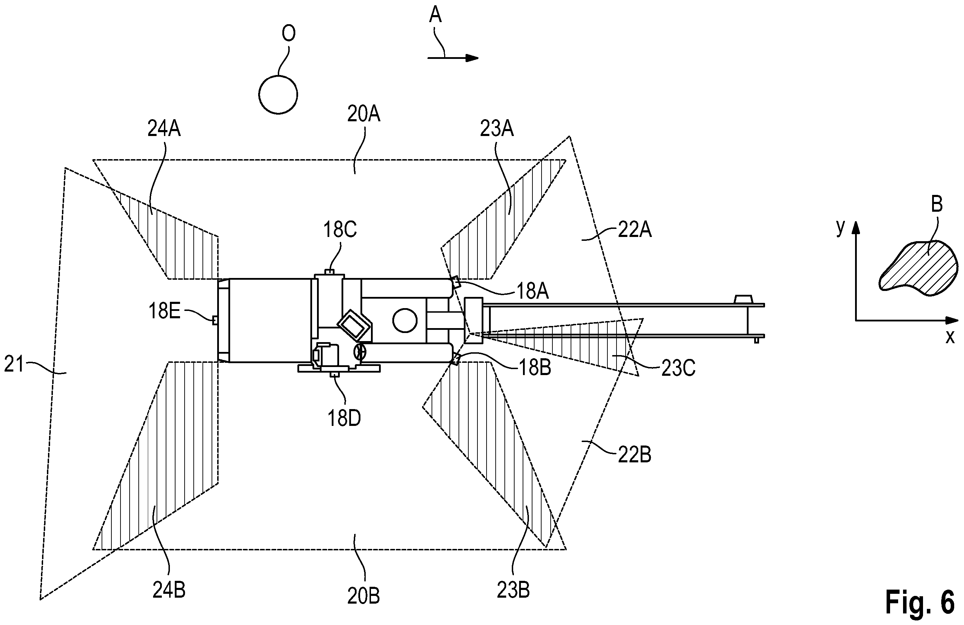

Fig. 6 zeigt die Baumaschine mit einer Neigung in Querrichtung auf die linke Seite. In dieser Position nehmen die linken Hubeinrichtungen 13A, 14A die gleiche Hubstellung ein und die rechten Hubeinrichtungen 13B, 14B nehmen die gleiche Hubstellung ein, wobei aber die rechten Hubeinrichtungen um einen größeren Weg ausgefahren sind als die linken Hubeinrichtungen.

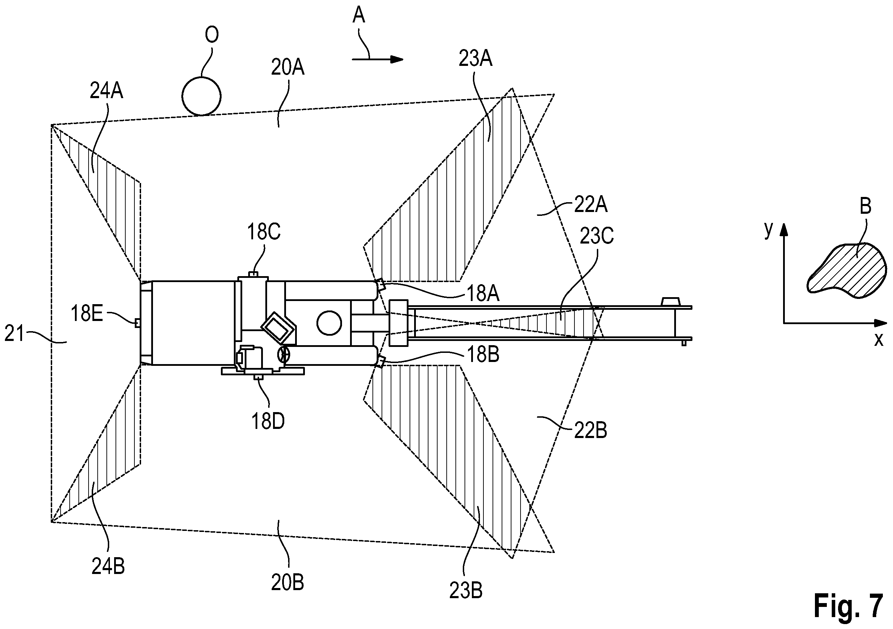

Fig. 7 zeigt die Baumaschine mit einer Neigung in Längsrichtung nach hinten. In dieser Position nehmen die hinteren Hubeinrichtungen 14 A,B die gleiche Hubstellung ein und die vorderen Hubeinrichtungen 13 A,B nehmen die gleiche Hubstellung ein, wobei aber die vorderen Hubeinrichtungen um einen größeren Weg ausgefahren sind als die hinteren Hubeinrichtungen.

Das Kamerasystem 18 umfasst mehrere am Maschinenrahmen 2 vorgesehene Kameras 18 A,B,C,D,E zur Aufnahme von einzelnen sich überlappenden Bildbereichen der Umgebung der Baumaschine aus unterschiedlichen Bildaufnahmepositionen. Die Kameras nehmen jeweils einen bestimmten Bildbereich der Bodenoberfläche B auf. Die Lage und Größe des von der Kamera aufgenommen Bildbereiches ist von der Anordnung und Ausrichtung der Kamera am Maschinenrahmen und der Kameraoptik, insbesondere der Brennweite des Objektives der Kamera, abhängig.

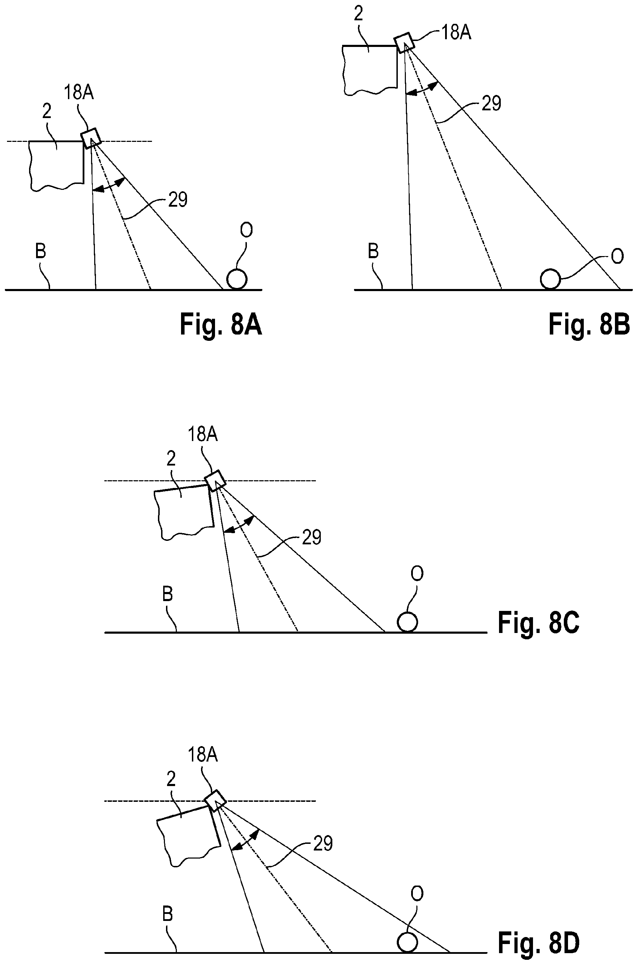

Die Figuren 8A bis 8D zeigen eine Kamera 18A des Kamerasystems 18 in vereinfachter schematischer Darstellung, die an dem Maschinenrahmen 2 befestigt ist. Die Kamera ist an dem Maschinenrahmen gegenüber der Ebene des Maschinenrahmens unter einem bestimmten Anstellwinkel befestigt, so dass die Blickrichtung 29 (Kameraachse) der Kamera 18A schräg nach unten zur Bodenoberfläche B geneigt ist, wenn der Maschinenrahmen 2 parallel zur Bodenoberfläche ausgerichtet ist. Die Bodenoberfläche B kann als eine Ebene angenommen werden, wenn die Höhenänderungen in dem relevanten Bereich des Geländes zu vernachlässigen sind, was in der Praxis der Fall ist.

Die Figuren 8A bis 8D verdeutlichen, dass eine Veränderung des Abstandes und/oder der Neigung der Kamera 18A zur Bodenoberfläche zu einer Veränderung des von der Kamera erfassten Bereichs der Bodenoberfläche B führt. Die Figuren 8A und 8B zeigen unterschiedliche Höhenpositionen des gegenüber der Bodenoberfläche B parallel ausgerichteten Maschinenrahmens 2, und die Figuren 8C und 8D zeigen unterschiedliche Neigungen des Maschinenrahmens 2 bei gleichen Höhe. Es zeigt sich, dass in Abhängigkeit von dem Abstandes und/oder der Neigung der Kamera 18A ein Objekt O nicht erfasst wird (Figuren 8A und 8C) oder erfasst wird (Figuren 8B und 8D).

Bei dem vorliegenden Ausführungsbeispiel befinden sich an den vorderen Eckbereichen des Maschinenrahmens 2 eine in Arbeitsrichtung vordere linke Kamera 18A und eine vordere rechte Kamera 18B, vorzugsweise mittig zwischen den linken, vorderen und hinteren Eckbereichen des Maschinenrahmens eine seitliche linke Kamera 18C und vorzugsweise mittig zwischen den rechten, vorderen und hinteren Eckbereichen des Maschinenrahmens eine seitliche rechte Kamera 18D und vorzugsweise mittig zwischen den hinteren Eckbereichen des Maschinenrahmens eine hintere Kamera 18E.

Es wird angenommen, dass jede Kamera 18 A,B,C,D,E einen im Wesentlichen rechteckförmigen Bildausschnitt der Bodenoberfläche B aufnehmen würde, wenn die Blickrichtung 29 der Kamera (Kameraachse) orthogonal auf der Bodenoberfläche stünde. Aufgrund des Anstellwinkels wird von der Kamera aber ein trapezförmiger Bildbereich der Bodenoberfläche aufgenommen, d. h. der außerhalb des trapezförmigen Bereichs liegende Bereich des Geländes wird von der Kamera nicht erfasst.

Die Kameraachsen 29 (Blickrichtungen) der seitlichen Kameras 18C und 18D und der hinteren Kamera 18E stehen vorzugsweise orthogonal zu den Längsseiten bzw. der Schmalseite des Maschinenrahmens 2, wobei die seitlichen Kameras einen trapezförmigen, seitlichen Bildbereich 20A, 20B und die hintere Kamera einen trapezförmigen, hinteren Bildbereich 21 aufnehmen. Die Kameraachsen 29 können aber auch nach vorne oder hinten gerichtet sein, um einen größeren vorderen bzw. hinteren Geländebereich zu erfassen. Dann können die Bildbereiche bei einer parallelen Ausrichtung des Maschinenrahmens zur Bodenoberfläche aber nicht durch gleichschenklige Trapeze beschrieben werden.

Die Kameraachse 29 der vorderen linken Kamera 18A verläuft schräg nach links außen und der vorderen rechten Kamera 18B schräg nach rechts außen, so dass die vordere linke Kamera einen vorderen linken Bildbereich 22A und die vordere rechte Kamera einen vorderen rechten Bildbereich 22B erfassen.

Wenn der Maschinenrahmen 2 aus der untersten Position durch Ausfahren sämtlicher Hubeinrichtungen 13 A,B und 14 A,B in die oberste Position angehoben wird, vergrößern sich die Flächen der Bildbereiche 20A, 20B, 21, 22A, 22B. Die Fläche eines Bildbereiches nimmt mit zunehmendem Abstand der Kamera zur Bodenoberfläche kontinuierlich zu.

Fig. 5 zeigt die Baumaschine in paralleler Ausrichtung zur Bodenoberfläche, wobei sämtliche Hubeinrichtungen 13 A,B und 14 A,B vollständig ausgefahren und der Maschinenrahmen 2 in die oberste Position angehoben ist. Die Größe der Bildbereiche 20A, 20B, 21, 22A, 22B verändert sich auch bei einer Neigung des Maschinenrahmens 2 (Rollen, Nicken). Wenn der Maschinenrahmen 2 in Richtung der Querachse Y zu der linken Seite geneigt wird, nimmt beispielsweise die Größe des rechten seitlichen Bildbereichs 20B zu, während die Größe des linken seitlichen Bildbereichs 20A abnimmt, da die linke Kamera 18C gegenüber der Bodenoberfläche B stärker geneigt ist als die rechte Kamera 18D (Fig. 6). Wenn der Maschinenrahmen 2 hingegen in Richtung der Querachse Y zu der rechten Seite geneigt wird, nimmt die Größe des rechten Bildbereichs 20B ab, während die Größe des linken Bildbereichs 20A zunimmt, da die rechte Kamera gegenüber der Bodenoberfläche stärker geneigt ist als die linke Kamera.

Die Figuren 4 bis 7 zeigen, dass eine Veränderung der Größe der Bildbereiche 20A, 20B,22A, 22B, 21 zur Folge haben kann, dass von der Bildanzeigeeinrichtung 17 bestimmte Bereiche der Bodenoberfläche B nicht erfasst werden. In der untersten Position des Maschinenrahmens wird beispielsweise ein auf der linken Seite liegendes Objekt O nicht erfasst (Fig. 4), während das Objekt O in der obersten Position erfasst wird (Fig. 5). Beispielsweise kann ein auf der linken Seite liegendes Objekt O bei einem Rollen der Baumaschine auf die linke Seite nicht mehr erfasst werden (Figuren 5 und 6).

Die Lageänderungen des Maschinenrahmens 2, an dem die Kameras 18 A,B,C,D,E befestigt sind, werden durch die Hubstellungen der Hubeinrichtungen 13 A,B und 14 A,B und die zu erwartenden Änderungen des Geländes begrenzt. Die Anordnung bzw. Ausrichtung und Optik der Kameras ist derart bemessen, dass sich die als trapezförmig angenommenen Bildbereiche 20A, 20B, 21, 22A, 22B unter sämtlichen möglichen Lagen des Maschinenrahmens 2 bei den zu erwartenden Änderungen des Geländes einander überlappen.

Es ergeben sich ein vorderer linker Überlappungsbereich 23A der Bildbereiche der seitlichen linken Kamera 18C und der vorderen linken Kamera 18A und ein vorderer rechter Überlappungsbereich 23B der Bildbereiche der seitlichen rechten Kamera 18D und der vorderen rechten Kamera 18B sowie ein vorderer mittlerer Überlappungsbereich 23C der Bildbereiche der vorderen, linken und rechten Kameras 18A, 18B. Des Weiteren ergeben sich ein hinterer linker Überlappungsbereich 24A der Bildbereiche der seitlichen linken Kamera 28C und der hinteren Kamera 18E und ein hinterer rechter Überlappungsbereich 24B der Bildbereiche der seitlichen rechten Kamera 18D und der hinteren Kamera 18E.

Die Lageerfassungs-Einrichtung 15 ist mit dem Bildverarbeitungssystem 19 über eine Datenleitung 25 verbunden, so dass das Bildverarbeitungssystem 19 die Höhendaten, Querneigungs- und Längsneigungs-Daten empfangen kann. Das Bildverarbeitungssystem 19 ist vorzugsweise eine Datenverarbeitungseinheit (CPU), auf der ein Datenverarbeitungsprogramm (Software) läuft.

Das Bildverarbeitungssystem 19 bestimmt unter Berücksichtigung der Höhe und Neigung des Maschinenrahmens 2 zunächst die Lage der in gepunkteten Linien dargestellten Umrisslinien der einzelnen Bildbereiche 20A, 20B, 21, 22A, 22B, deren Lage und Größe sich bei einer Veränderung der Höhe und Neigung des Maschinenrahmens 2 verändern. Die Lage der geraden Umrisslinien kann in einem kartesischen X/Y-Koordinatensystem, das auf der Oberfläche des Bodens liegt, durch deren Anfangs- und Endpunkte beschrieben werden. Die Koordinaten dieser Punkte werden in dem Bildverarbeitungssystem 19 nach einem Algorithmus berechnet, der die Höhe und Neigung des Maschinenrahmens berücksichtigt.

Nachdem die Lage und Größe der Bildbereiche 20A, 20B, 21, 22A, 22B bekannt ist, die durch die Koordinaten der Anfangs- und Endpunkte der Umrisslinien beschrieben werden, bestimmt das Bildverarbeitungssystem 19 die Lage und Größe der Überlappungsbereiche 23A, 23B, 23C, 24A, 24B der einander angrenzenden Bildbereiche. Die Überlappungsbereiche können beispielsweise durch Berechnung einer Schnittmenge benachbarter Bildbereiche bestimmt werden.

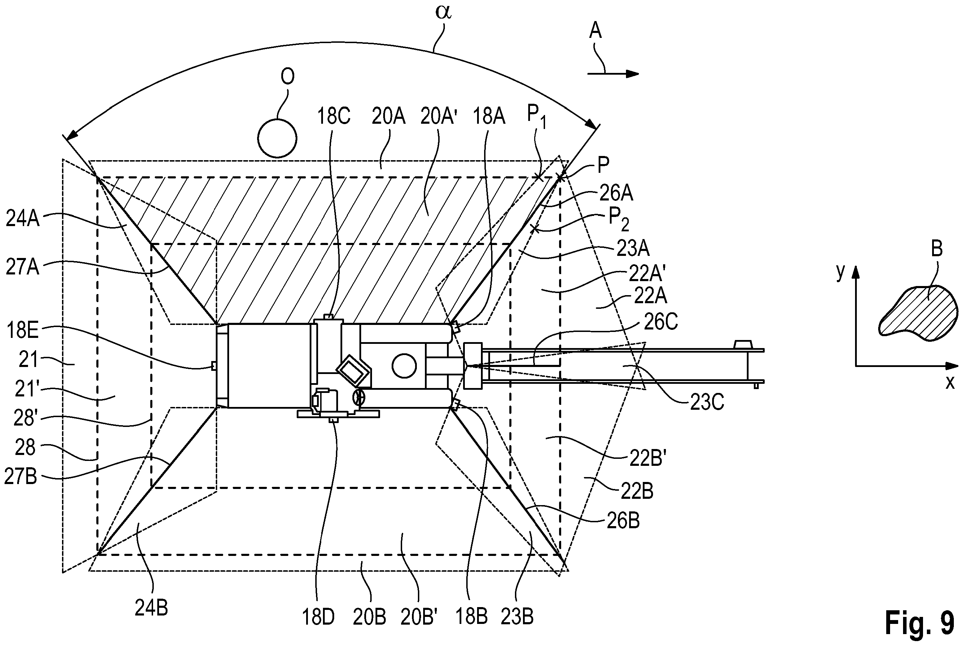

Das Bildverarbeitungssystem 19 ist derart konfiguriert, dass in den einzelnen Bildbereichen 20A, 20B, 21, 22A, 22B Bildausschnitte 20A', 20B', 21', 22A', 22B' (Figuren 9 bis 12) festgelegt werden, d. h. passende Ausschnitte aus den aufgenommenen Bildbereichen der Bodenoberfläche B, die sich zu einem Gesamtbild in der Vogelperspektive lückenlos zusammenfügen lassen. Beim Zusammenfügen der Bildausschnitte 20A', 20B', 21', 22A', 22B' ergeben sich Nähte 26A, 26B, 26C, 27A, 27B (Stitching), d. h. Grenzlinien zwischen den Bildausschnitten bzw. Schnittlinien der Bildbereiche. Der Verlauf der Nähte ist von der Lage und Größe der sich überlappenden trapezförmigen Bildausschnitte abhängig.

Das Bildverarbeitungssystem bestimmt in dem X/Y-Koordinatensystem die Koordinaten der Anfangs- und Endpunkte der Umrisslinien des vorderen linken Überlappungsbereichs 23A, des vorderen rechten Überlappungsbereichs 23B , des vorderer mittleren Überlappungsbereichs 23C, des hinteren linken Überlappungsbereichs 24A und des hinteren rechten Überlappungsbereichs 24B. Die Überlappungsbereiche sind in den Figuren 4 bis 7 durch Schraffuren dargestellt.

Daraufhin legt das Bildverarbeitungssystem den Verlauf der Nähte (Stitching) 26A, 26B, 26C, 27A, 27B fest, wobei folgende Kriterien Berücksichtigung finden.

Die Lage und Größe der Bildbereiche 20A, 20B, 21, 22A, 22B und somit auch der Überlappungsbereiche 23A, 23B, 23C, 24A, 24B ist von der Höhe und Neigung des Maschinenrahmens 2 gegenüber der Bodenoberfläche B abhängig. Der Verlauf der Nähte 26A, 26B, 26C, 27A, 27B wird von dem Bildverarbeitungssystem 19 derart bestimmt, dass die Nähte innerhalb der Überlappungsbereiche 23A, 23B, 23C, 24A, 24B der Bildbereiche 20A, 20B, 21, 22A, 22B verlaufen. Folglich werden die innerhalb der Überlappungsbereiche befindlichen Nähte zwischen den Bildausschnitten 20A', 20B', 21', 22A', 22B' in Abhängigkeit von der Höhe und Neigung des Maschinenrahmens gegenüber der Bodenoberfläche festgelegt. Der Verlauf der Nähte und die Lage und Größe der Bildausschnitte ist in den Figuren 9 bis 12 dargestellt.

Das Bildverarbeitungssystem 19 legt eine linke vordere Naht 26A in dem vorderen linken Überlappungsbereich 23A, eine rechte vordere Naht 26B in dem vorderen rechten Überlappungsbereich 23B, eine mittlere vordere Naht 26C in dem vorderen mittleren Überlappungsbereich 23C, eine linke hintere Naht 27A in dem hinteren linken Überlappungsbereich 24A und eine rechte hintere Naht 27B in dem hinteren rechten Überlappungsbereich 24B fest.

Die Anfangs- und Endpunkte der Nähte werden in dem X/Y-Koordinatensystem wieder durch Koordinaten für die linke vordere Naht 26A , rechte vordere Naht 26B, mittlere vordere Naht 26C, linke hintere Naht 27A und rechte hintere Naht 27B beschrieben.

Die Figuren 9 bis 12 zeigen, wie sich der Verlauf der Nähte 26A, 26B, 26C, 27A, 27B in Abhängigkeit von der Höhe und/oder Neigung des Maschinenrahmens 2 verändert. Es zeigt sich, dass der von den Nähten aufgespannte Öffnungswinkel α mit zunehmender Neigung des Maschinenrahmens 2 zu bzw. abnimmt.

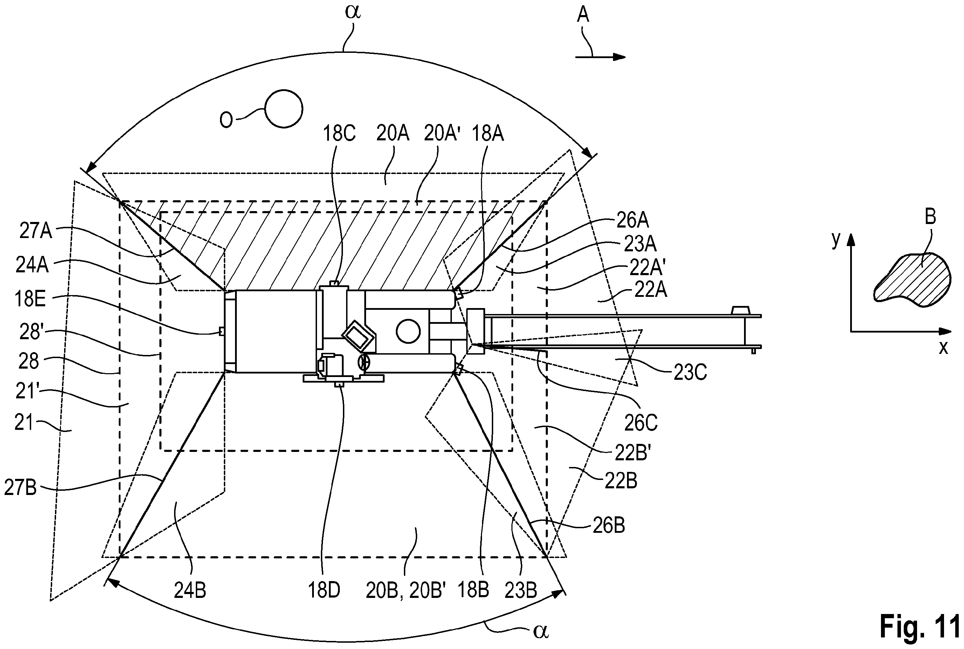

Die Bildverarbeitungseinheit 19 ist daher derart konfiguriert, dass bei einer Querneigung des Maschinenrahmens 2 aus einer zu der Bodenoberfläche B parallelen Ausrichtung auf die linke Seite der Verlauf der linken, vorderen und hinteren Naht 26A, 27A des linken seitlichen Bildausschnitts, und/oder der rechten, vorderen und hinteren Naht 26B, 27B des rechten seitlichen Bildausschnitts derart festgelegt wird, dass mit zunehmender Neigung des Maschinenrahmens auf die linke Seite der von den linken Nähten 26A, 27A aufgespannte Öffnungswinkel α abnimmt und der von den rechten Nähten 26B, 27B aufgespannte Öffnungswinkel α zunimmt (Fig. 11), und bei einer Querneigung des Maschinenrahmens 2 aus einer zu der Bodenoberfläche parallelen Ausrichtung auf die rechte Seite derart festgelegt wird, dass mit zunehmender Neigung des Maschinenrahmens der von den linken Nähten aufgespannte Öffnungswinkel zunimmt und der von den rechten Nähten aufgespannte Öffnungswinkel abnimmt.

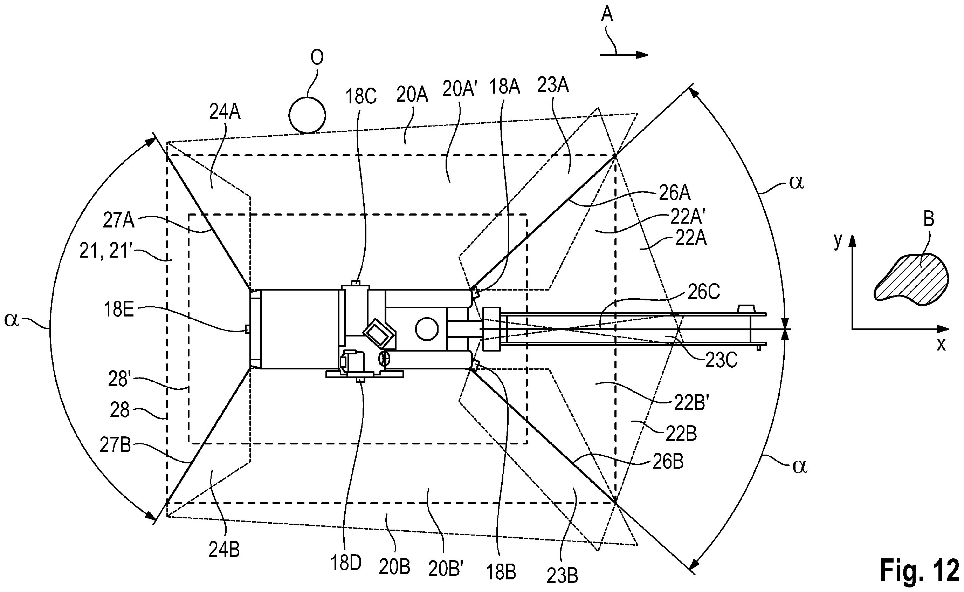

Bei einer Längsneigung des Maschinenrahmens aus einer zu der Bodenoberfläche B parallelen Ausrichtung nach hinten (Fig. 12), wird der Verlauf der vorderen Nähte 26A, 26B, 26C von dem Bildverarbeitungssystem 19 derart festgelegt, dass mit zunehmender Neigung des Maschinenrahmens 2 der von der linken und mittleren Naht 26A, 26C aufgespannte Öffnungswinkel α und der von der rechten und mittleren Naht 26B, 26C aufgespannte Öffnungswinkel α zunimmt, und der Verlauf der hinteren Nähte 17A, 27B wird derart festgelegt, dass mit zunehmender Neigung des Maschinenrahmens 2 der von der linken und rechten, hinteren Naht 27A, 27B aufgespannte Öffnungswinkel α abnimmt.

Bei einer Längsneigung des Maschinenrahmens 2 aus einer zu der Bodenoberfläche B parallelen Ausrichtung nach vorne, wird der Verlauf der vorderen Nähte 26A, 26B, 26C derart festgelegt, dass mit zunehmender Neigung des Maschinenrahmens 2 der von der linken und mittleren Naht 26A, 26C aufgespannte Öffnungswinkel α und der von der rechten und mittleren Naht 26B, 26C aufgespannte Öffnungswinkel α abnimmt, und der Verlauf der hinteren Nähte 27A, 27B wird derart festgelegt, dass mit zunehmender Neigung des Maschinenrahmens der von der linken und rechten, hinteren Naht 27A, 27B aufgespannte Öffnungswinkel α zunimmt.

Bei dem vorliegenden Ausführungsbeispiel wird der Verlauf der Nähte derart festgelegt, dass die Anfangspunkte der linken und rechten, vorderen Nähte 26A, 26B und die Anfangspunkte der linken und rechten, hinteren Nähte 27A, 27B unabhängig von der Höhe und Neigung des Maschinenrahmens 2 auf den Eckpunkten des Maschinenrahmens liegen. Wenn die Maschine nicht zur Seite geneigt ist, liegt der Anfangspunkt der mittleren vorderen Naht 26C mittig zwischen den Anfangspunkten der linken und rechten, vorderen Naht 26A, 26B auf der Längsachse X des Maschinenrahmens. Bei einer Querneigung der Maschine wird der Anfangspunkt der mittleren vorderen Naht 26C zu der jeweiligen Seite verschoben. Dabei wird näherungsweise davon ausgegangen, dass die Anfangspunkte der Nähte an den Eckpunkten des Maschinenrahmens 2 in sämtlichen Positionen des Maschinenrahmens immer im Bereich der Überlappungsbereiche 23A, 23B, 23C, 24A, 24B liegen.

In den Figuren 9 bis 12 zeigt sich, dass für die Nähte 26A, 26B, 26C, 27A, 27B unterschiedliche Endpunkte festgelegt werden können, die innerhalb der Überlappungsbereiche 23A, 23B, 23C, 24A, 24B liegen. Beispielsweise könnte der Endpunkt P der Naht 23A auch auf den Punkt P1 oder P2 gelegt werden (Fig. 9). In Abhängigkeit von der Wahl der Endpunkte P kann das Gesamtbild daher aus unterschiedlichen Bildausschnitten zusammengefügt werden. Folglich ergeben sich auch unterschiedliche Bereiche der Bodenoberfläche, die in der Vogelperspektive lückenlos und eindeutig dargestellt werden können.

Das Bildverarbeitungssystem legt die Endpunkte P vorzugsweise derart fest, dass ein möglichst großer Bereich der Umgebung mit sämtlichen Kameras lückenlos erfasst wird. Diesbezüglich können unterschiedliche Kriterien vorgegeben werden. Beispielsweise kann die Sicht nach vorne auf Kosten der Sicht nach hinten erweitert werden oder umgekehrt. Es kann aber auch die Sicht zur linken Seite auf Kosten der Sicht zur rechten Seite erweitert werden oder umgekehrt.

Der Verlauf der Nähte 26A, 26B, 26C, 27A, 27B legt auch die Lage und Größe der auszuwählenden Bildausschnitte 20A', 20B', 21', 22A', 22B' in Abhängigkeit von der Höhe und Neigung des Maschinenrahmens 2 fest. Das Gesamtbild ist vorzugsweise ein rechteckförmiges Bild, das auf dem rechteckförmigen Display 9A der Anzeigeeinheit 9 dargestellt werden kann, wobei die Bildausschnitte die zwischen den Nähten liegenden Ausschnitte der Bildbereiche in dem Gesamtbild sind.

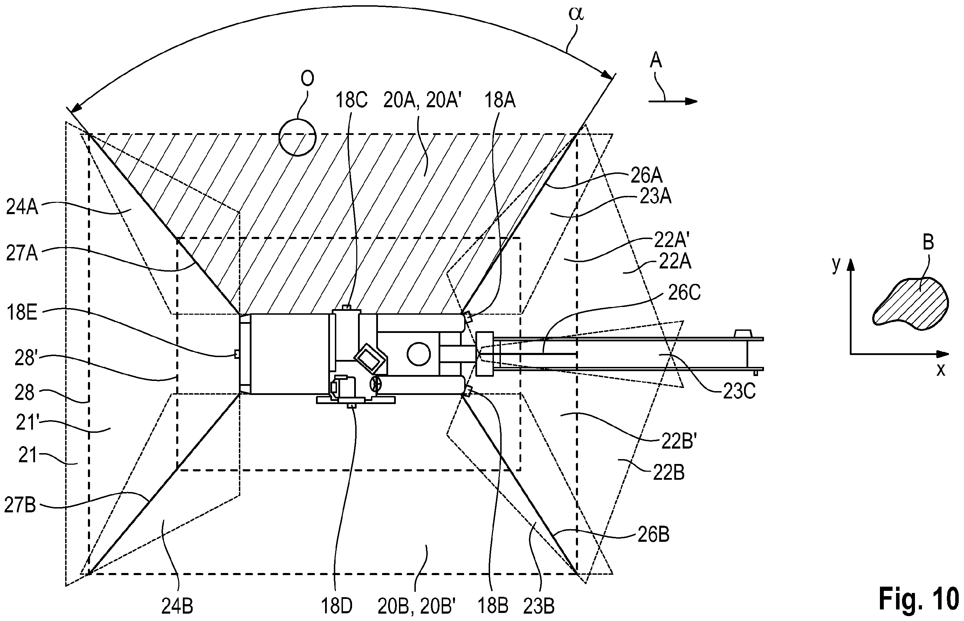

Das Bildverarbeitungssystem 19 erzeugt ein Gesamtbild durch Zusammenfügen der Bildausschnitte, wobei die Eckpunkte des Gesamtbildes auf den Endpunkten der Nähte liegen. In den Figuren 8 bis 12 ist das mit der Anzeigeeinheit 9 dargestellte Gesamtbild durch eine gestrichelte Linie 28 gekennzeichnet. Es zeigt sich in den Figuren 9 bis 12, dass das Gesamtbild 28 beim Anheben und Absenken des Maschinenrahmens 2 (Figuren 9 und 10) zwar größer bzw. kleiner wird, aber bezüglich des Maschinenrahmens seine Symmetrie beibehält. Ein Rollen oder Nicken der Baumaschine führt aber zu einer Verschiebung des Gesamtbildes 28 nach vorne bzw. hinten oder auf die linke bzw. rechte Seite (Figuren 11 und 12). Das Bildverarbeitungssystem 19 sieht daher unterschiedliche Darstellungsmodi vor, die vom Maschinenführer mit einer Eingabeeinheit am Bedienpult 7 ausgewählt werden können.

Der Maschinenführer kann einen Darstellungsmodus vorgeben, in dem nur ein Ausschnitt 28' des Gesamtbildes 28 in der Vogelperspektive dargestellt wird. Der Bildausschnitt 28' aus dem Gesamtbild 28 ist vorzugsweise wieder ein rechteckförmiger Ausschnitt, der in den Figuren 9 bis 12 in gestrichelten Linien 28' dargestellt ist. Dieser Ausschnitt 28' wird derart festgelegt, dass für sämtliche mögliche Positionen der Baumaschine eine Verschiebung des mit der Anzeigeeinheit 9 dargestellten Bildes nicht auftritt, d.h. in einzelnen Positionen nicht erfasste Bereiche außerhalb des dargestellten Bildbereiches liegen. Hierzu wird der Ausschnitt 28' aus dem Gesamtbild 28 von dem Bildverarbeitungssystem 19 entsprechend kleiner bemessen.

## Patentansprüche

1. Selbstfahrende Frontlader-Baumaschine, insbesondere Straßenfräsmaschine, Recycler oder Surface-Miner, mit
einem Maschinenrahmen (2), der von einem Fahrwerk (1) getragen wird, das vordere und hintere Laufwerke (11A,B; 12 A,B) aufweist,
einer Transporteinrichtung (10) in Arbeitsrichtung (A) an der Vorderseite des Maschinenrahmens (2),
einer am Maschinenrahmen (2) angeordneten Arbeitseinrichtung (3) zur Bearbeitung des Bodens,
den einzelnen Laufwerken zugeordneten Hubeinrichtungen (13 A,B; 14 A,B), die zum Anheben bzw. Absenken der Laufwerke (11A,B; 12 A,B) gegenüber dem Maschinenrahmen (2) jeweils ein- bzw. ausfahrbar sind, so dass die Höhe und/oder die Neigung des Maschinenrahmens gegenüber der Bodenoberfläche (B) veränderbar ist,
einer die Höhe und/oder die Neigung des Maschinenrahmens (2) gegenüber der Bodenoberfläche (B) erfassenden Lageerfassungs-Einrichtung (15) und
einer Bildanzeigeeinrichtung (17) zur Anzeige eines Bildes der Umgebung der Baumaschine, welche als eine Bildanzeigeeinrichtung zur Anzeige eines Bildes der Umgebung der Baumaschine in der Vogelperspektive ausgebildet ist, die ein Kamerasystem (18) mit mehreren am Maschinenrahmen vorgesehenen Kameras (18, 18B, 18C, 18D, 18E) zur Aufnahme von einzelnen sich überlappenden Bildbereichen (20A, 20B, 21, 22A, 22B) der Baumaschinenumgebung aus unterschiedlichen Bildaufnahmepositionen und ein mit der Lageerfassungs-Einrichtung (17) zusammenwirkendes Bildverarbeitungssystem (19) aufweist, das derart konfiguriert ist, dass Bildausschnitte (20A', 20B', 21', 22A', 22B') der einzelnen Bildbereiche (20A, 20B, 21, 22A, 22B) zu einem Gesamtbild (28) in der Vogelperspektive zusammengefügt werden, wobei der Verlauf der Nähte (26A, 26B, 26C, 27A, 27B) zwischen den Bildausschnitten (20A', 20B', 21', 22A', 22B') in Abhängigkeit von der Höhe und/oder der Neigung des Maschinenrahmens (2) gegenüber der Bodenoberfläche (B) festgelegt wird,
wobei das Kamerasystem (18) aufweist:
zwei in Arbeitsrichtung vordere Kameras (18A, 18B), die zu beiden Seiten der Transporteinrichtung (10) angeordnet sind, so dass zwei vordere Bildbereiche (22A, 22B) aufgenommen werden, die sich überlappen,
eine linke Kamera (18C) an der in Arbeitsrichtung linken Längsseite der Baumaschine und eine rechte Kamera (18D) an der in Arbeitsrichtung (A) rechten Längsseite der Baumaschine, so dass ein linker und rechter Bildbereich (20A, 20B) aufgenommen werden, und
eine in Arbeitsrichtung (A) hintere Kamera (18E), so dass ein hinterer Bildbereich (21) aufgenommen wird.

2. Selbstfahrende Hecklader-Baumaschine, insbesondere Straßenfräsmaschine, Recycler oder Surface-Miner, mit
einem Maschinenrahmen (2), der von einem Fahrwerk (1) getragen wird, das vordere und hintere Laufwerke (11A,B; 12 A,B) aufweist,
einer Trausporteinrichtung (10) in Arbeitsrichtung (A) an der Rückseite des Maschinenrahmens (2),
einer am Maschinenrahmen (2) angeordneten Arbeitseinrichtung (3) zur Bearbeitung des Bodens,
den einzelnen Laufwerken zugeordneten Hubeinrichtungen (13 A,B; 14 A,B), die zum Anheben bzw. Absenken der Laufwerke (11A,B; 12 A,B) gegenüber dem Maschinenrahmen (2) jeweils ein- bzw. ausfahrbar sind, so dass die Höhe und/oder die Neigung des Maschinenrahmens gegenüber der Bodenoberfläche (B) veränderbar ist,
einer die Höhe und/oder die Neigung des Maschinenrahmens (2) gegenüber der Bodenoberfläche (B) erfassenden Lageerfassungs-Einrichtung (15) und
einer Bildanzeigeeinrichtung (17) zur Anzeige eines Bildes der Umgebung der Baumaschine, welche als eine Bildanzeigeeinrichtung zur Anzeige eines Bildes der Umgebung der Baumaschine in der Vogelperspektive ausgebildet ist, die ein Kamerasystem (18) mit mehreren am Maschinenrahmen vorgesehenen Kameras (18, 18B, 18C, 18D, 18E) zur Aufnahme von einzelnen sich überlappenden Bildbereichen (20A, 20B, 21, 22A, 22B) der Baumaschinenumgebung aus unterschiedlichen Bildaufnahmepositionen und ein mit der Lageerfassungs-Einrichtung (17) zusammenwirkendes Bildverarbeitungssystem (19) aufweist, das derart konfiguriert ist, dass Bildausschnitte (20A', 20B', 21', 22A', 22B') der einzelnen Bildbereiche (20A, 20B, 21, 22A, 22B) zu einem Gesamtbild (28) in der Vogelperspektive zusammengefügt werden, wobei der Verlauf der Nähte (26A, 26B, 26C, 27A, 27B) zwischen den Bildausschnitten (20A', 20B', 21', 22A', 22B') in Abhängigkeit von der Höhe und/oder der Neigung des Maschinenrahmens (2) gegenüber der Bodenoberfläche (B) festgelegt wird,
wobei das Kamerasystem (18) aufweist:
zwei in Arbeitsrichtung hintere Kameras (18A, 18B), die zu beiden Seiten der Transporteinrichtung (10) angeordnet sind, so dass zwei hintere Bildbereiche (22A, 22B) aufgenommen werden, die sich überlappen,
eine linke Kamera (18C) an der in Arbeitsrichtung linken Längsseite der Baumaschine und eine rechte Kamera (18D) an der in Arbeitsrichtung (A) rechten Längsseite der Baumaschine, so dass ein linker und rechter Bildbereich (20A, 20B) aufgenommen werden, und
eine in Arbeitsrichtung (A) vordere Kamera (18E), so dass ein vorderer Bildbereich (21) aufgenommen wird.

3. Selbstfahrende Baumaschine nach Anspruch 1 oder 2, **dadurch gekennzeichnet, dass** die Lageerfassungs-Einrichtung (15) derart konfiguriert ist, dass die Höhe des Maschinenrahmens (2) gegenüber der Bodenoberfläche (B) beschreibende Höhendaten und/oder die Neigung des Maschinenrahmens (2) gegenüber der Bodenoberfläche (B) in einer Richtung quer zur Arbeitsrichtung (A) der Baumaschine beschreibende Querneigungs-Daten und/oder die Neigung des Maschinenrahmens gegenüber der Bodenoberfläche in Längsrichtung der Baumaschine beschreibende Längsneigungs-Daten erzeugt werden, und das Bildverarbeitungssystem (19) derart konfiguriert ist, dass auf der Basis der Höhendaten und/oder Querneigungs-Daten und/oder Längsneigungs-Daten der Verlauf der Nähte (26A, 26B, 26C, 27A, 27B) zwischen den Bildausschnitten derart festgelegt wird, dass die Nähte innerhalb der Überlappungsbereiche liegen.

4. Selbstfahrende Baumaschine nach Anspruch 3, **dadurch gekennzeichnet, dass** das Bildverarbeitungssystem (19) derart konfiguriert ist, dass auf der Basis der Höhendaten und/oder Querneigungs-Daten und/oder Längsneigungs-Daten für die Festlegung des Verlaufes der Nähte (26A, 26B, 26C, 27A, 27B) zwischen den Bildausschnitten die Umrisslinien der einzelnen Bildbereiche (20A, 20B, 21, 22A, 22B) der Kameras (18A, 18B, 18C, 18D, 18E) bestimmt werden und auf der Basis der Umrisslinien die Überlappungsbereiche (23A, 23B, 23C, 24A, 24B) der Bildbereiche bestimmt werden.

5. Selbstfahrende Baumaschine nach einem der Ansprüche 1 bis 4, **dadurch gekennzeichnet, dass** das Bildverarbeitungssystem (19) derart konfiguriert ist, dass Bildausschnitte (20A', 20B', 21', 22A', 22B') der einzelnen Bildbereiche (20A, 20B, 21, 22A, 22B) zu einem im Wesentlichen rechteckförmigen Gesamtbild (28) in der Vogelperspektive zusammengefügt werden.

6. Selbstfahrende Baumaschine nach einem der Ansprüche 1 bis 5, **dadurch gekennzeichnet, dass** das Bildverarbeitungssystem (19) derart konfiguriert ist, dass ein in Bezug auf die Längsseiten und/oder Querseiten des Maschinenrahmens (2) symmetrischer Ausschnitt (28') des Gesamtbildes (28) in der Vogelperspektive angezeigt wird.

7. Selbstfahrende Baumaschine nach Anspruch 1, **dadurch gekennzeichnet, dass** die beiden vorderen Kameras (18A, 18B) an den vorderen Eckbereichen des Maschinenrahmens (2) angeordnet sind und/oder die linke und rechte Kamera (18C, 18D) mittig zwischen den vorderen und hinteren Eckbereichen des Maschinenrahmens (2) angeordnet sind und die hintere Kamera (18E) mittig zwischen den hinteren Eckbereichen des Maschinenrahmens (2) angeordnet ist.

8. Selbstfahrende Baumaschine nach Anspruch 7, **dadurch gekennzeichnet, dass** das Bildverarbeitungssystem (19) derart konfiguriert ist, dass der Verlauf der Nähte (26A, 26B, 26C, 27A, 27B) derart festgelegt wird,
dass ein in Arbeitsrichtung (A) linker und rechter, vorderer Bildausschnitt (22A', 22B') definiert werden, wobei der linke vordere Bildausschnitt (22A') von einer linken vorderen Naht (26A), die sich von dem linken vorderen Eckbereich erstreckt, und einer vorderen mittleren Naht (26C), die sich von der Vorderseite erstreckt, seitlich begrenzt wird, und der rechte vordere Bildausschnitt (22B') von einer rechten vorderen Naht (26B), die sich von dem rechten vorderen Eckbereich erstreckt, und der vorderen mittleren Naht (26C) seitlich begrenzt wird,
dass ein in Arbeitsrichtung (A) linker und rechter, seitlicher Bildausschnitt (20A', 20B') definiert werden, wobei der linke seitliche Bildausschnitt (20A') von einer linken hinteren Naht (27A), die sich von dem linken hinteren Eckbereich erstreckt, und der linken vorderen Naht (26A) seitlich begrenzt wird, und der rechte seitliche Bildausschnitt (20B') von einer rechten hinteren Naht (27B), die sich von dem rechten hinteren Eckbereich erstreckt, und der rechten vorderen Naht (26B) seitlich begrenzt wird, und
dass ein in Arbeitsrichtung (A) hinterer Bildausschnitt (21') definiert wird, der von der linken und rechten, hinteren Naht (27A, 27B) seitlich begrenzt wird.

9. Selbstfahrende Baumaschine nach Anspruch 8, **dadurch gekennzeichnet, dass** das Bildverarbeitungssystem (19) derart konfiguriert ist, dass bei einer Querneigung des Maschinenrahmens (2) aus einer zu der Bodenoberfläche (B) parallelen Ausrichtung auf die linke Seite der Verlauf der linken, vorderen und hinteren Naht (26A, 27A) des linken seitlichen Bildausschnitts (20A'), und/oder der rechten, vorderen und hinteren Naht (26B, 27B) des rechten seitlichen Bildausschnitts (20B') derart festgelegt wird, dass mit zunehmender Neigung des Maschinenrahmens (2) auf die linke Seite der von den linken Nähten (26A, 27A) aufgespannte Öffnungswinkel (a) abnimmt und der von den rechten Nähten (26B, 27B) aufgespannte Öffnungswinkel zunimmt, und bei einer Querneigung des Maschinenrahmens (2) aus einer zu der Bodenoberfläche (B) parallelen Ausrichtung auf die rechte Seite derart festgelegt wird, dass mit zunehmender Neigung des Maschinenrahmens (2) auf die rechte Seite der von den linken Nähten (26A, 27A) aufgespannte Öffnungswinkel (a) zunimmt und der von den rechten Nähten (26B, 27B) aufgespannte Öffnungswinkel (a) abnimmt.

10. Selbstfahrende Baumaschine nach Anspruch 8 oder 9, **dadurch gekennzeichnet, dass** das Bildverarbeitungssystem (19) derart konfiguriert ist,
dass bei einer Längsneigung des Maschinenrahmens (2) aus einer zu der Bodenoberfläche (B) parallelen Ausrichtung nach vorne, der Verlauf der vorderen Nähte (26A, 26B, 26C) derart festgelegt wird, dass mit zunehmender Neigung des Maschinenrahmens (2) nach vorne der von der linken und mittleren Naht (26A, 26C) aufgespannte Öffnungswinkel (a) und der von der rechten und mittleren Naht (26B, 26C) aufgespannte Öffnungswinkel (26A, 27A) abnimmt, und der Verlauf der hinteren Nähte derart festgelegt wird, dass mit zunehmender Neigung des Maschinenrahmens nach vorne der von der linken und rechten, hinteren Naht (27A, 27B) aufgespannte Öffnungswinkel (α) zunimmt und
bei einer Längsneigung des Maschinenrahmens (2) aus einer zu der Bodenoberfläche (B) parallelen Ausrichtung nach hinten, der Verlauf der vorderen Nähte derart festgelegt wird, dass mit zunehmender Neigung des Maschinenrahmens (2) nach hinten der von der linken und mittleren, vorderen Naht (26A, 26C) aufgespannte Öffnungswinkel (a) und der von der rechten und mittleren, vorderen Naht (26B, 26C) aufgespannte Öffnungswinkel (a) zunimmt, und der Verlauf der hinteren Nähte derart festgelegt wird, dass mit zunehmender Neigung des Maschinenrahmens (2) nach hinten der von der linken und rechten, hinteren Naht (27A, 27B) aufgespannte Öffnungswinkel (a) abnimmt.

11. Selbstfahrende Baumaschine nach einem der Ansprüche 1 bis 10, **dadurch gekennzeichnet, dass** die Lageerfassungs-Einrichtung (15) die Hubstellungen der Hubeinrichtungen (13 A,B; 14 A,B) erfassende Sensoren (15A) und eine Recheneinheit (15B) aufweist, die derart konfiguriert ist, dass aus den Hubstellungen der Hubeinrichtungen die Höhendaten und/oder die Querneigungs-Daten und/oder Längsneigungs-Daten berechnet werden.

12. Verfahren zur Anzeige des Bildes der Umgebung einer selbstfahrenden Frontlader-Baumaschine, insbesondere Straßenfräsmaschine, Recycler, Surface-Miner, die aufweist:
einen Maschinenrahmen, der von einem Fahrwerk getragen wird, das vordere und hintere Laufwerke aufweist,
eine Transporteinrichtung (10) in Arbeitsrichtung (A) an der Vorderseite des Maschinenrahmens (2),
mindestens eine am Maschinenrahmen angeordneten Arbeitseinrichtung zur Bearbeitung des Bodens,
den einzelnen Laufwerken zugeordneten Hubeinrichtungen, die zum Anheben bzw. Absenken der Laufwerke gegenüber dem Maschinenrahmen jeweils ein- bzw. ausfahrbar sind, so dass die Höhe und/oder die Neigung des Maschinenrahmens gegenüber der Bodenoberfläche veränderbar ist,
wobei
die Höhe und/oder der Neigung des Maschinenrahmens gegenüber der Bodenoberfläche erfasst wird und ein Bild der Umgebung der Baumaschine in der Vogelperspektive angezeigt wird, wobei mit mehreren am Maschinenrahmen vorgesehenen Kameras einzelne sich überlappende Bildbereiche der Baumaschinenumgebung aus unterschiedlichen Bildaufnahmepositionen aufgenommen werden und Bildausschnitte der einzelnen Bildbereiche zu einem Gesamtbild in der Vogelperspektive zusammengefügt werden, wobei der Verlauf der Nähte zwischen den Bildausschnitten in Abhängigkeit von der Höhe und/oder der Neigung des Maschinenrahmens gegenüber der Bodenoberfläche festgelegt wird, und
wobei mit zwei in Arbeitsrichtung vorderen Kameras, die zu beiden Seiten der Transporteinrichtung angeordnet sind, zwei vordere Bildbereiche aufgenommen werden, die sich überlappen, mit einer linken Kamera an der in Arbeitsrichtung linken Längsseite der Baumaschine und einer rechten Kamera an der in Arbeitsrichtung rechten Längsseite der Baumaschine ein linker und rechter Bildbereich aufgenommen werden, und mit einer in Arbeitsrichtung hinteren Kamera ein hinterer Bildbereich aufgenommen wird.

13. Verfahren zur Anzeige des Bildes der Umgebung einer selbstfahrenden Hecklader-Baumaschine, insbesondere Straßenfräsmaschine, Recycler, Surface-Miner, die aufweist:
einen Maschinenrahmen, der von einem Fahrwerk getragen wird, das vordere und hintere Laufwerke aufweist,
eine Transporteinrichtung (10) in Arbeitsrichtung (A) an der Rückseite des Maschinenrahmens (2),
mindestens eine am Maschinenrahmen angeordneten Arbeitseinrichtung zur Bearbeitung des Bodens,
den einzelnen Laufwerken zugeordneten Hubeinrichtungen, die zum Anheben bzw. Absenken der Laufwerke gegenüber dem Maschinenrahmen jeweils ein- bzw.
ausfahrbar sind, so dass die Höhe und/oder die Neigung des Maschinenrahmens gegenüber der Bodenoberfläche veränderbar ist,
wobei
die Höhe und/oder der Neigung des Maschinenrahmens gegenüber der Bodenoberfläche erfasst wird und ein Bild der Umgebung der Baumaschine in der Vogelperspektive angezeigt wird, wobei mit mehreren am Maschinenrahmen vorgesehenen Kameras einzelne sich überlappende Bildbereiche der Baumaschinenumgebung aus unterschiedlichen Bildaufnahmepositionen aufgenommen werden und Bildausschnitte der einzelnen Bildbereiche zu einem Gesamtbild in der Vogelperspektive zusammengefügt werden, wobei der Verlauf der Nähte zwischen den Bildausschnitten in Abhängigkeit von der Höhe und/oder der Neigung des Maschinenrahmens gegenüber der Bodenoberfläche festgelegt wird, und
wobei mit zwei in Arbeitsrichtung hinteren Kameras, die zu beiden Seiten der Transporteinrichtung angeordnet sind, zwei hintere Bildbereiche aufgenommen werden, die sich überlappen, mit einer linken Kamera an der in Arbeitsrichtung linken Längsseite der Baumaschine und einer rechten Kamera an der in Arbeitsrichtung rechten Längsseite der Baumaschine ein linker und rechter Bildbereich aufgenommen werden, und mit einer in vorderen Kamera ein vorderer Bildbereich aufgenommen wird.

14. Verfahren nach Anspruch 12 oder 13, **dadurch gekennzeichnet, dass** die Bildausschnitte der einzelnen Bildbereiche zu einem im Wesentlichen rechteckförmigen Gesamtbild in der Vogelperspektive zusammengefügt werden.

15. Verfahren nach Anspruch einem der Ansprüche 12 bis 14, **dadurch gekennzeichnet, dass** ein in Bezug auf die Längsseiten und/oder Querseiten des Maschinenrahmens symmetrischer Ausschnitt des Gesamtbildes in der Vogelperspektive angezeigt wird.

16. Verfahren nach Anspruch 12, **dadurch gekennzeichnet, dass** bei einer Querneigung des Maschinenrahmens aus einer zu der Bodenoberfläche parallelen Ausrichtung auf die linke Seite der Verlauf der linken, vorderen und hinteren Naht des linken seitlichen Bildausschnitts, und/oder der rechten, vorderen und hinteren Naht des rechten seitlichen Bildausschnitts derart festgelegt wird, dass mit zunehmender Neigung des Maschinenrahmens auf die linke Seite der von den linken Nähten aufgespannte Öffnungswinkel abnimmt und der von den rechten Nähten aufgespannte Öffnungswinkel zunimmt, und bei einer Querneigung des Maschinenrahmens aus einer zu der Bodenoberfläche parallelen Ausrichtung auf die rechte Seite derart festgelegt wird, dass mit zunehmender Neigung des Maschinenrahmens auf die rechte Seite der von den linken Nähten aufgespannte Öffnungswinkel zunimmt und der von den rechten Nähten aufgespannte Öffnungswinkel abnimmt.

17. Verfahren nach Anspruch 12 oder 16, **dadurch gekennzeichnet, dass**
bei einer Längsneigung des Maschinenrahmens aus einer zu der Bodenoberfläche parallelen Ausrichtung nach vorne, der Verlauf der vorderen Nähte derart festgelegt wird, dass mit zunehmender Neigung des Maschinenrahmens nach vorne der von der linken und mittleren Naht aufgespannte Öffnungswinkel und der von der rechten und mittleren Naht aufgespannte Öffnungswinkel abnimmt, und der Verlauf der hinteren Nähte derart festgelegt wird, dass mit zunehmender Neigung des Maschinenrahmens nach vorne der von der linken und rechten, hinteren Naht aufgespannte Öffnungswinkel zunimmt und
bei einer Längsneigung des Maschinenrahmens aus einer zu der Bodenoberfläche parallelen Ausrichtung nach hinten, der Verlauf der vorderen Nähte derart festgelegt wird, dass mit zunehmender Neigung des Maschinenrahmens nach hinten der von der linken und mittleren Naht aufgespannte Öffnungswinkel und der von der rechten und mittleren Naht aufgespannte Öffnungswinkel zunimmt, und der Verlauf der hinteren Nähte derart festgelegt wird, dass mit zunehmender Neigung des Maschinenrahmens nach hinten der von der linken und rechten, hinteren Naht aufgespannte Öffnungswinkel abnimmt.

## Claims

1. Self-propelled front loader construction machine, in particular road milling machine, recycler or surface miner, having
a machine frame (2), which is carried by a chassis (1), which has front and rear running gears (11A,B; 12A,B),
a conveying device (10) in the working direction (A) on the front side of the machine frame (2),
a working device (3) arranged on the machine frame (2) for working the ground,
lifting devices (13A,B; 14A,B), which are associated with the individual running gears and can be retracted and extended in each case to raise or lower the running gears (11A,B; 12A,B) in relation to the machine frame (2), so that the height and/or the incline of the machine frame in relation to the ground surface (B) can be changed,
a position detection device (15) detecting the height and/or the incline of the machine frame (2) in relation to the ground surface (B), and
an image display device (17) for displaying an image of the surroundings of the construction machine, which is configured as an image display device for displaying a bird's eye view image of the surroundings of the construction machine, which image display device has a camera system (18) with a plurality of cameras (18, 18B, 18C, 18D, 18E) provided on the machine frame for recording individual overlapping image regions (20A, 20B, 21, 22A, 22B) of the construction machine surroundings from different image recording positions and an image processing system (19), which cooperates with the position detection device (17) and is configured in such a way that image details (20A', 20B', 21', 22A', 22B') of the individual image regions (20A, 20B, 21, 22A, 22B) are joined together to form a total image (28) from a bird's eye view, wherein the course of the stitching (26A, 26B, 26C, 27A, 27B) between the image details (20A', 20B', 21', 22A', 22B') is determined depending on the height and/or the incline of the machine frame (2) in relation to the ground surface (B), wherein the camera system (18) comprises:
two front cameras (18A, 18B) in the working direction, which are arranged on the two sides of the transport device (10), so that two front image regions (22A, 22B) that overlap are recorded,
a left-hand camera (18C) on the left-hand longitudinal side of the construction ma-chine in the working direction and a right-hand camera (18D) on the right-hand longitudinal side of the construction machine in the working direction (A), so that a left-hand and right-hand image region (20A, 20B) are recorded, and
a rear camera (18E) in the working direction (A), so that a rear image region (21) is recorded.

2. Self-propelled rear loader construction machine, in particular road milling machine, recycler or surface miner, having
a machine frame (2), which is carried by a chassis (1), which has front and rear running gears (11A,B; 12A,B),
a conveying device (10) in the working direction (A) on the rear side of the machine frame (2),
a working device (3) arranged on the machine frame (2) for working the ground,
lifting devices (13A,B; 14A,B), which are associated with the individual running gears and can be retracted and extended in each case to raise or lower the running gears (11A,B; 12A,B) in relation to the machine frame (2), so that the height and/or the incline of the machine frame in relation to the ground surface (B) can be changed,
a position detection device (15) detecting the height and/or the incline of the machine frame (2) in relation to the ground surface (B), and
an image display device (17) for displaying an image of the surroundings of the construction machine, which is configured as an image display device for displaying a bird's eye view image of the surroundings of the construction machine, which image display device has a camera system (18) with a plurality of cameras (18, 18B, 18C, 18D, 18E) provided on the machine frame for recording individual overlapping image regions (20A, 20B, 21, 22A, 22B) of the construction machine surroundings from different image recording positions and an image processing system (19), which cooperates with the position detection device (17) and is configured in such a way that image details (20A', 20B', 21', 22A', 22B') of the individual image regions (20A, 20B, 21, 22A, 22B) are joined together to form a total image (28) from a bird's eye view, wherein the course of the stitching (26A, 26B, 26C, 27A, 27B) between the image details (20A', 20B', 21', 22A', 22B') is determined depending on the height and/or the incline of the machine frame (2) in relation to the ground surface (B), wherein the camera system (18) comprises:
two rear cameras (18A, 18B) in the working direction, which are arranged on the two sides of the transport device (10), so that two rear image regions (22A, 22B) that overlap are recorded,
a left-hand camera (18C) on the left-hand longitudinal side of the construction ma-chine in the working direction and a right-hand camera (18D) on the right-hand longitudinal side of the construction machine in the working direction (A), so that a left-hand and right-hand image region (20A, 20B) are recorded, and
a front camera (18E) in the working direction (A), so that a front image region (21) is recorded.

3. Self-propelled construction machine according to claim 1 or 2, **characterised in that** the position detection device (15) is configured in such a way that the height data describing the height of the machine frame (2) in relation to the ground surface (B) and/or the transverse incline data describing the incline of the machine frame (2) in relation to the ground surface (B) in a direction transverse to the working direction (A) of the construction machine and/or the longitudinal incline data describing the incline of the machine frame in relation to the ground surface in the longitudinal direction of the construction machine are produced, and the image processing system (19) is configured in such a way that the course of the stitching (26A, 26B, 26C, 27A, 27B) between the image details is determined based on the height data and/or transverse incline data and/or longitudinal incline data in such a way that the stitching is located within the overlapping regions.

4. Self-propelled construction machine according to claim 3, **characterised in that** the image processing system (19) is configured in such a way that the contours of the individual image regions (20A, 20B, 21, 22A, 22B) of the cameras (18A, 18B, 18C, 18D, 18E) are determined based on the height data and/or transverse incline data and/or longitudinal incline data to determine the course of the stitching (26A, 26B, 26C, 27A, 27B) between the image details, and the overlapping regions (23A, 23B, 23C, 24A, 24B) of the image regions are determined based on the contours.

5. Self-propelled construction machine according to any of claims 1 to 4, **characterised in that** the image processing system (19) is configured in such a way that image details (20A', 20B', 21', 22A', 22B') of the individual image regions (20A, 20B, 21, 22A, 22B) are joined together to form a substantially rectangular total image (28) from a bird's eye view.

6. Self-propelled construction machine according to any of claims 1 to 5, **characterised in that** the image processing system (19) is configured in such a way that a detail (28') of the total image (28) that is symmetrical in relation to the longitudinal sides and/or transverse sides of the machine frame (2) is displayed from a bird's eye view.

7. Self-propelled construction machine according to claim 1, **characterised in that** the two front cameras (18A, 18B) are arranged on the front corner regions of the machine frame (2) and/or the left-hand and right-hand cameras (18C, 18D) are arranged centrally between the front and rear corner regions of the machine frame (2) and the rear camera (18E) is arranged centrally between the rear corner regions of the machine frame (2).

8. A Self-propelled construction machine according to claim 7, **characterised in that** the image processing system (19) is configured in such a way that the course of the stitching (26A, 26B, 26C, 27A, 27B) is determined in such a way,
that a left-hand and right-hand front image detail (22A', 22B') in the working direction (A) are defined, wherein the left-hand front image detail (22A') is laterally limited by a left-hand front stitching (26A), which extends from the left-hand front corner region, and a front central stitching (26C), which extends from the front side, and the right-hand front image detail (22B') is laterally limited by a right-hand front stitching (26B), which extends from the right-hand front corner region, and the front central stitching (26C),
that a left-hand and right-hand lateral image detail (20A', 20B') in the working direction (A) are defined, wherein the left-hand lateral image detail (20A') is laterally limited by a left-hand rear stitching (27A), which extends from the left-hand rear corner region, and the left-hand front stitching (26A), and the right-hand lateral image detail (20B') is laterally limited by a right-hand rear stitching (27B), which extends from the right-hand rear corner region, and the right-hand front stitching (26B), and
that a rear image detail (21') in the working direction (A) is defined, which is laterally limited by the left-hand and right-hand rear stitching (27A, 27B).

9. Self-propelled construction machine according to claim 8, **characterised in that** the image processing system (19) is configured in such a way that when there is a transverse incline of the machine frame (2) from a parallel orientation to the ground surface (B) to the left-hand side, the course of the left-hand front and rear stitching (26A, 27A) of the left-hand lateral image detail (20A'), and/or the right-hand front and rear stitching (26B, 27B) of the right-hand lateral image detail (20B') is determined in such a way that with an increasing incline of the machine frame (2) to the left-hand side, the opening angle (a) spanned by the left-hand stitching (26A, 27A) decreases and the opening angle spanned by the right-hand stitching (26B, 27B) increases, and when there is a transverse incline of the machine frame (2) from a parallel orientation to the ground surface (B) to the right-hand side, the course is determined in such a way that with an increasing incline of the machine frame (2) to the right-hand side, the opening angle (a) spanned by the left-hand stitching (26A, 27A) increases and the opening angle (a) spanned by the right-hand stitching (26B, 27B) decreases.

10. Self-propelled construction machine according to claim 8 or 9, **characterised in that** the image processing system (19) is configured in such a way,
that when there is a longitudinal incline of the machine frame (2) from a parallel orientation to the ground surface (B) forward, the course of the front stitching (26A, 26B, 26C) is determined in such a way that with an increasing incline of the machine frame (2) forward, the opening angle (a) spanned by the left-hand and central stitching (26A, 26C) and the opening angle (26A, 27A) spanned by the right-hand and central stitching (26B, 26C) decrease, and the course of the rear stitching is determined in such a way that with an increasing incline of the machine frame forward, the opening angle (α) spanned by the left-hand and right-hand rear stitching (27A, 27B) increases, and
when there is a longitudinal incline of the machine frame (2) from a parallel orientation to the ground surface (B) rearward, the course of the front stitching is determined in such a way that with an increasing incline of the machine frame (2) rearward, the opening angle (α) spanned by the left-hand and central front stitching (26A, 26C) and the opening angle (α) spanned by the right-hand and central front stitching (26B, 26C) increase, and the course of the rear stitching is determined in such a way that with an increasing incline of the machine frame (2) rearward, the opening angle (α) spanned by the left-hand and right-hand rear stitching (27A, 27B) decreases.

11. Self-propelled construction machine according to any of claims 1 to 10, **characterised in that** the position detection device (15) has sensors (15A) detecting the lifting positions of the lifting devices (13A,B; 14A,B) and a computing unit (15B), which is configured in such a way that the height data and/or the transverse incline data and/or longitudinal incline data are calculated from the lifting positions of the lifting devices.

12. Method for displaying the image of the surroundings of a self-propelled front loader construction machine, in particular a road milling machine, recycler, surface miner, which comprises:
a machine frame, which is carried by a chassis, which has front and rear running gears,
a conveying device (10) in the working direction (A) on the front side of the machine frame (2),
at least one working device arranged on the machine frame for working the ground,
lifting devices, which are associated with the individual running gears and can be retracted and extended in each case to raise or lower the running gears in relation to the machine frame, so that the height and/or the incline of the machine frame in relation to the ground surface can be changed, wherein
the height and/or the incline of the machine frame in relation to the ground surface is detected and a bird's eye view image of the surroundings of the construction machine is displayed, wherein individual overlapping image regions of the construction machine surroundings are recorded from different image recording positions using a plurality of cameras provided on the machine frame and image details of the individual image regions are joined together to form a total image from a bird's eye view, the course of the stitching between the image details being determined depending on the height and/or the incline of the machine frame in relation to the ground surface, and wherein
two front image regions which overlap being recorded using two front cameras in the working direction, which are arranged on the two sides of the transport device, a left-hand and right-hand image region being recorded using a left-hand camera on the left-hand longitudinal side of the construction machine in the working direction and using a right-hand camera on the right-hand longitudinal side of the construction machine in the working direction, and a rear image region being recorded using a rear camera in the working direction.

13. Method for displaying the image of the surroundings of a self-propelled rear loader construction machine, in particular a road milling machine, recycler, surface miner, which comprises:
a machine frame, which is carried by a chassis, which has front and rear running gears,
a conveying device (10) in the working direction (A) on the rear side of the machine frame (2),
at least one working device arranged on the machine frame for working the ground,
lifting devices, which are associated with the individual running gears and can be retracted and extended in each case to raise or lower the running gears in relation to the machine frame, so that the height and/or the incline of the machine frame in relation to the ground surface can be changed, wherein
the height and/or the incline of the machine frame in relation to the ground surface is detected and a bird's eye view image of the surroundings of the construction machine is displayed, wherein individual overlapping image regions of the construction machine surroundings are recorded from different image recording positions using a plurality of cameras provided on the machine frame and image details of the individual image regions are joined together to form a total image from a bird's eye view, the course of the stitching between the image details being determined depending on the height and/or the incline of the machine frame in relation to the ground surface, and wherein
two rear image regions which overlap being recorded using two rear cameras in the working direction, which are arranged on the two sides of the transport device, a left-hand and right-hand image region being recorded using a left-hand camera on the left-hand longitudinal side of the construction machine in the working direction and using a right-hand camera on the right-hand longitudinal side of the construction machine in the working direction, and a front image region being recorded using a front camera in the working direction.

14. Method according to claim 12 or 13, **characterised in that** the image details of the individual image regions are joined together to form a substantially rectangular total image from a bird's eye view.

15. Method according to any of claims 12 to 14, **characterised in that** a detail of the total image that is symmetrical in relation to the longitudinal sides and/or transverse sides of the machine frame is displayed from a bird's eye view.

16. Method according to claim 12, **characterised in that** when there is a transverse incline of the machine frame from a parallel orientation to the ground surface to the left-hand side, the course of the left-hand front and rear stitching of the left-hand lateral image detail and/or of the right-hand front and rear stitching of the right-hand lateral image detail is determined in such a way that with an increasing incline of the machine frame to the left-hand side, the opening angle spanned by the left-hand stitching decreases and the opening angle spanned by the right-hand stitching increases, and when there is a transverse incline of the machine frame from a parallel orientation to the ground surface to the right-hand side, the course is determined in such a way that with an increasing incline of the machine frame to the right-hand side, the opening angle spanned by the left-hand stitching increases and the opening angle spanned by the right-hand stitching decreases.

17. Method according to either claim 12 or claim 16, **characterised in that**
when there is a longitudinal incline of the machine frame from a parallel orientation to the ground surface forward, the course of the front stitching is determined in such a way that with an increasing incline of the machine frame forward, the opening angle spanned by the left-hand and central stitching and the opening angle spanned by the right-hand and central stitching decrease and the course of the rear stitching is determined in such a way that with an increasing incline of the machine frame forward, the opening angle spanned by the left-hand and right-hand rear stitching increases, and
when there is a longitudinal incline of the machine frame from a parallel orientation to the ground surface rearward, the course of the front stitching is determined in such a way that with an increasing incline of the machine frame rearward, the opening angle spanned by the left-hand and central stitching and the opening angle spanned by the right-hand and central stitching increase, and the course of the rear stitching is determined in such a way that with an increasing incline of the machine frame rearward, the opening angle spanned by the left-hand and right-hand rear stitching decreases.

## Revendications

1. Engin de chantier autopropulsé à chargeur frontal, en particulier fraiseuse sur route, recycleuse ou mineuse de surface, avec
un châssis d'engin (2) qui est porté par un mécanisme de déplacement (1) qui présente des mécanismes de roulement avant et arrière (11A, B ; 12A, B),
un dispositif de transport (10) dans le sens de travail (A) au niveau du côté avant du châssis d'engin (2),
un dispositif de travail (3) agencé au niveau du châssis d'engin (2) pour l'usinage du sol,
des dispositifs de levage (13A, B ; 14A, B) associés aux mécanismes de roulement individuels qui peuvent être entrés ou sortis respectivement pour le levage ou l'abaissement des mécanismes de roulement (11A, B ; 12A, B) par rapport au châssis d'engin (2) de sorte que la hauteur et/ou l'inclinaison du châssis d'engin puisse être modifiée par rapport à la surface de sol (B),
un dispositif de détection de position (15) détectant la hauteur et/ou l'inclinaison du châssis d'engin (2) par rapport à la surface de sol (B) et
un dispositif d'affichage d'image (17) pour l'affichage d'une image de l'environnement de l'engin de chantier qui est réalisé comme un dispositif d'affichage d'image pour l'affichage d'une image de l'environnement de l'engin de chantier dans la perspective à vol d'oiseau qui présente un système de caméra (18) avec plusieurs caméras (18, 18B, 18C, 18D, 18E) prévues au niveau du châssis d'engin pour l'acquisition de zones d'image (20A, 20B, 21, 22A, 22B) individuelles de l'environnement d'engin de chantier se chevauchant à partir de différentes positions d'acquisition d'image et un système de traitement d'image (19) coagissant avec le dispositif de détection de position (17) qui est configuré de telle manière que des sections d'image (20A', 20B', 21', 22A', 22B') des zones d'image individuelles (20A, 20B, 21, 22A, 22B) soient réunies en une image globale (28) dans la perspective à vol d'oiseau, dans lequel le tracé des joints (26A, 26B, 26C, 27A, 27B) entre les sections d'image (20A', 20B', 21', 22A', 22B') est fixé en fonction de la hauteur et/ou de l'inclinaison du châssis d'engin (2) par rapport à la surface de sol (B),
dans lequel le système de caméra (18) présente :
deux caméras avant (18A, 18B) dans le sens de travail qui sont agencées des deux côtés du dispositif de transport (10) de sorte que deux zones d'image avant (22A, 22B) soient acquises, lesquelles se chevauchent,
une caméra gauche (18C) au niveau du côté longitudinal gauche dans le sens de travail de l'engin de chantier et une caméra droite (18D) au niveau du côté longitudinal droit dans le sens de travail (A) de l'engin de chantier de sorte que des zones d'image gauche et droite (20A, 20B) soient acquises, et
une caméra arrière (18E) dans le sens de travail (A) de sorte qu'une zone d'image arrière (21) soit acquise.

2. Engin de chantier autopropulsé à chargeur arrière, en particulier fraiseuse sur route, recycleuse ou mineuse de surface, avec
un châssis d'engin (2) qui est porté par un mécanisme de déplacement (1) qui présente des mécanismes de roulement avant et arrière (11A, B ; 12A, B),
un dispositif de transport (10) dans le sens de travail (A) au niveau du côté arrière du châssis d'engin (2),
un dispositif de travail (3) agencé au niveau du châssis d'engin (2) pour l'usinage du sol,
des dispositifs de levage (13A, B ; 14A, B) associés aux mécanismes de roulement individuels qui peuvent être entrés ou sortis respectivement pour le levage ou l'abaissement des mécanismes de roulement (11A, B ; 12A, B) par rapport au châssis d'engin (2) de sorte que la hauteur et/ou l'inclinaison du châssis d'engin puisse être modifiée par rapport à la surface de sol (B),
un dispositif de détection de position (15) détectant la hauteur et/ou l'inclinaison du châssis d'engin (2) par rapport à la surface de sol (B) et
un dispositif d'affichage d'image (17) pour l'affichage d'une image de l'environnement de l'engin de chantier qui est réalisé comme un dispositif d'affichage d'image pour l'affichage d'une image de l'environnement de l'engin de chantier dans la perspective à vol d'oiseau qui présente un système de caméra (18) avec plusieurs caméras (18, 18B, 18C, 18D, 18E) prévues au niveau du châssis d'engin pour l'acquisition de zones d'image (20A, 20B, 21, 22A, 22B) individuelles de l'environnement d'engin de chantier se chevauchant à partir de différentes positions d'acquisition d'image et un système de traitement d'image (19) coagissant avec le dispositif de détection de position (17) qui est configuré de telle manière que des sections d'image (20A', 20B', 21', 22A', 22B') des zones d'image individuelles (20A, 20B, 21, 22A, 22B) soient réunies en une image globale (28) dans la perspective à vol d'oiseau, dans lequel le tracé des joints (26A, 26B, 26C, 27A, 27B) entre les sections d'image (20A', 20B', 21', 22A', 22B') est fixé en fonction de la hauteur et/ou de l'inclinaison du châssis d'engin (2) par rapport à la surface de sol (B),
dans lequel le système de caméra (18) présente :
deux caméras arrière (18A, 18B) dans le sens de travail qui sont agencées des deux côtés du dispositif de transport (10) de sorte que deux zones d'image arrière (22A, 22B) soient acquises, lesquelles se chevauchent,
une caméra gauche (18C) au niveau du côté longitudinal gauche dans le sens de travail de l'engin de chantier et une caméra droite (18D) au niveau du côté longitudinal droit dans le sens de travail (A) de l'engin de chantier de sorte que des zones d'image gauche et droite (20A, 20B) soient acquises, et
une caméra avant (18E) dans le sens de travail (A) de sorte qu'une zone d'image avant (21) soit acquise.

3. Engin de chantier autopropulsé selon la revendication 1 ou 2, **caractérisé en ce que** le dispositif de détection de position (15) est configuré de telle manière que des données de hauteur décrivant la hauteur du châssis d'engin (2) par rapport à la surface de sol (B) et/ou des données d'inclinaison transversale décrivant l'inclinaison du châssis d'engin (2) par rapport à la surface de sol (B) dans une direction transversale au sens de travail (A) de l'engin de chantier et/ou des données d'inclinaison longitudinale décrivant l'inclinaison du châssis d'engin par rapport à la surface de sol dans la direction longitudinale de l'engin de chantier soient générées, et le système de traitement d'image (19) est configuré de telle manière que sur la base des données de hauteur et/ou des données d'inclinaison transversale et/ou des données d'inclinaison longitudinale le tracé des joints (26A, 26B, 26C, 27A, 27B) entre les sections d'image soit fixé de telle manière que les joints se trouvent dans les zones de chevauchement.

4. Engin de chantier autopropulsé selon la revendication 3, **caractérisé en ce que** le système de traitement d'image (19) est configuré de telle manière que les lignes de contour des zones d'image individuelles (20A, 20B, 21, 22A, 22B) des caméras (18A, 18B, 18C, 18D, 18E) sont déterminées sur la base des données de hauteur et/ou des données d'inclinaison transversale et/ou des données d'inclinaison longitudinale pour la fixation du tracé des joints (26A, 26B, 26C, 27A, 27B) entre les sections d'image et des zones d'image sont déterminées sur la base des lignes de contour les zones de chevauchement (23A, 23B, 23C, 24A, 24B).

5. Engin de chantier autopropulsé selon l'une des revendications 1 à 4, **caractérisé en ce que** le système de traitement d'image (19) est configuré de telle manière que des sections d'image (20A', 20B', 21', 22A', 22B') des zones d'image (20A, 20B, 21, 22A, 22B) individuelles soient assemblées en une image globale (28) dans la perspective à vol d'oiseau sensiblement rectangulaire.

6. Engin de chantier autopropulsé selon l'une des revendications 1 à 5, **caractérisé en ce que** le système de traitement d'image (19) est configuré de telle manière qu'une section (28') de l'image globale (28) dans la perspective à vol d'oiseau symétrique par rapport aux côtés longitudinaux et/ou aux côtés transversaux du châssis d'engin (2) soit affichée.

7. Engin de chantier autopropulsé selon la revendication 1, **caractérisé en ce que** les deux caméras avant (18A, 18B) sont agencées au niveau des zones de coin avant du châssis d'engin (2) et/ou les caméras gauche et droite (18C, 18D) sont agencées au milieu entre les zones de coin avant et arrière du châssis d'engin (2) et la caméra arrière (18E) est agencée au milieu entre les zones de coin arrière du châssis d'engin (2).

8. Engin de chantier autopropulsé selon la revendication 7, **caractérisé en ce que** le système de traitement d'image (19) est configuré de telle manière que le tracé des joints (26A, 26B, 26C, 27A, 27B) soit fixé de telle manière qu'une section d'image (22A', 22B') avant, gauche et droite dans la direction de travail (A) soit définie, dans lequel la section d'image (22A') avant gauche est délimitée latéralement par un joint avant gauche (26A) qui s'étend depuis la zone de coin avant gauche, et un joint médian avant (26C) qui s'étend depuis le côté avant, et la section d'image avant droite (22B') est délimitée latéralement par un joint avant droit (26B) qui s'étend depuis la zone de coin avant droite, et le joint médian avant (26C),
qu'une section d'image (20A', 20B') latérale, gauche et droite dans la direction de travail (A) soit définie, dans lequel la section d'image (20A') latérale gauche est délimitée latéralement par un joint (27A) arrière gauche qui s'étend depuis la zone de coin arrière gauche, et le joint avant gauche (26A), et la section d'image (20B') latérale droite est délimitée par un joint arrière droit (27B) qui s'étend depuis la zone de coin arrière droit, et le joint avant droit (26B), et
qu'une section d'image (21') arrière dans la direction de travail (A) soit définie, laquelle est délimitée latéralement par les joints arrière, gauche et droit (27A, 27B).

9. Engin de chantier autopropulsé selon la revendication 8, **caractérisé en ce que** le système de traitement d'image (19) est configuré de telle manière que, en cas d'inclinaison transversale du châssis d'engin (2) à partir d'une orientation parallèle à la surface de sol (B) sur le côté gauche, le tracé des joints gauches, avant et arrière (26A, 27A) de la section d'image (20A') latérale gauche, et/ou des joints droits, avant et arrière (26B, 27B) de la section d'image (20B') latérale droite soit fixé de telle manière qu'avec une inclinaison croissante du châssis d'engin (2) sur le côté gauche l'angle d'ouverture (α) défini par les joints gauches (26A, 27A) diminue et l'angle d'ouverture défini par les joints droits (26B, 27B) augmente, et, en cas d'inclinaison transversale du châssis d'engin (2) à partir d'une orientation parallèle à la surface de sol (B) sur le côté droit, soit fixé de telle manière qu'avec une inclinaison croissante du châssis d'engin (2) sur le côté droit l'angle d'ouverture (α) défini par les joints gauches (26A, 27A) augmente et l'angle d'ouverture (α) défini par les joints droits (26B, 27B) diminue.

10. Engin de chantier autopropulsé selon la revendication 8 ou 9, **caractérisé en ce que** le système de traitement d'image (19) est configuré de telle manière qu'en cas d'inclinaison longitudinale du châssis d'engin (2) vers l'avant à partir d'une orientation parallèle à la surface de sol (B), le tracé des joints avant (26A, 26B, 26C) soit fixé de telle manière qu'avec une inclinaison croissante du châssis d'engin (2) vers l'avant l'angle d'ouverture (α) défini par les joints gauche et médian (26A, 26C) et l'angle d'ouverture (26A, 27A) défini par les joints droit et médian (26B, 26C) diminue, et le tracé des joints arrière soit fixé de telle manière qu'avec une inclinaison croissante du châssis d'engin vers l'avant l'angle d'ouverture (α) défini par les joints arrière, gauche et droit (27A, 27B) augmente et qu'en cas d'inclinaison longitudinale du châssis d'engin (2) vers l'arrière à partir d'une orientation parallèle à la surface de sol (B), le tracé des joints avant soit fixé de telle manière qu'avec une inclinaison croissante du châssis d'engin (2) vers l'arrière l'angle d'ouverture (α) défini par les joints avant, gauche et médian (26A, 26C) et l'angle d'ouverture (α) défini par les joints avant, droit et médian (26B, 26C) augmente, et le tracé des joints arrière soit fixé de telle manière qu'avec une inclinaison croissante du châssis d'engin (2) vers l'arrière l'angle d'ouverture (α) défini par les joints arrière, gauche et droit (27A, 27B) diminue.

11. Engin de chantier autopropulsé selon l'une des revendications 1 à 10, **caractérisé en ce que** le dispositif de détection de position (15) présente des capteurs (15A) détectant les positions de levage des dispositifs de levage (13A,
B ; 14A, B) et une unité de calcul (15B) qui est configurée de telle manière qu'à partir des positions de levage des dispositifs de levage les données de hauteur et/ou les données d'inclinaison transversale et/ou les données d'inclinaison longitudinale soient calculées.

12. Procédé d'affichage de l'image de l'environnement d'un engin de chantier autopropulsé à chargeur avant, en particulier fraiseuse sur route, recycleuse, mineuse de surface qui présente :
un châssis d'engin qui est porté par un mécanisme de déplacement qui présente des mécanismes de roulement avant et arrière,
un dispositif de transport (10) dans la direction de travail (A) au niveau du côté avant du châssis d'engin (2),
au moins un dispositif de travail agencé au niveau du châssis d'engin pour l'usinage du sol,
des dispositifs de levage associés aux mécanismes de roulement individuels qui peuvent être entrés ou sortis respectivement pour le levage ou l'abaissement des mécanismes de roulement par rapport au châssis d'engin de sorte que la hauteur et/ou l'inclinaison du châssis d'engin puisse être modifiée par rapport à la surface de sol,
dans lequel
la hauteur et/ou l'inclinaison du châssis d'engin par rapport à la surface de sol est détectée et une image de l'environnement de l'engin de chantier dans la perspective à vol d'oiseau est affichée, dans lequel avec plusieurs caméras prévues au niveau du châssis d'engin des zones d'image individuelles de l'environnement d'engin de chantier se chevauchant sont acquises à partir de différentes positions d'acquisition d'image et des sections d'image des zones d'image individuelles sont réunies en une image globale dans la perspective à vol d'oiseau, dans lequel le tracé des joints entre les sections d'image est fixé en fonction de la hauteur et/ou de l'inclinaison du châssis d'engin par rapport à la surface de sol, et
dans lequella direction de travail, deux zones d'image avant qui se chevauchent sont acquises avec deux caméras avant dans la direction de travail qui sont agencées des deux côtés du dispositif de transport, la direction de travailla direction de travail des zones d'image gauche et droite sont acquises , avec une caméra gauche au niveau du côté longitudinal gauche dans la direction de travail de l'engin de chantier et une caméra droite au niveau du côté longitudinal droit dans la direction de travail de l'engin de chantier et la direction de travail une zone d'image arrière est acquise avec une caméra arrière dans la direction de travail.

13. Procédé pour l'affichage de l'image de l'environnement d'un engin de chantier autopropulsé à chargeur arrière, en particulier fraiseuse sur route, recycleuse, mineuse de surface qui présente :
un châssis d'engin qui est porté par un mécanisme de déplacement qui présente des mécanismes de roulement avant et arrière,
un dispositif de transport (10) dans la direction de travail (A) au niveau du côté arrière du châssis d'engin (2),
au moins un dispositif de travail agencé au niveau du châssis d'engin pour l'usinage du sol,
des dispositifs de levage associés aux mécanismes de roulement individuels qui peuvent être entrés ou sortis respectivement pour le levage ou l'abaissement des mécanismes de roulement par rapport au châssis d'engin de sorte que la hauteur et/ou l'inclinaison du châssis d'engin puisse être modifiée par rapport à la surface de sol,
dans lequel
la hauteur et/ou l'inclinaison du châssis d'engin par rapport à la surface de sol est détectée et une image de l'environnement de l'engin de chantier dans la perspective à vol d'oiseau est affichée, dans lequel avec plusieurs caméras prévues au niveau du châssis d'engin des zones d'image individuelles de l'environnement d'engin de chantier se chevauchant sont acquises à partir de différentes positions d'acquisition d'image et des sections d'image des zones d'image individuelles sont réunies en une image globale dans la perspective à vol d'oiseau, dans lequel le tracé des joints entre les sections d'image est fixé en fonction de la hauteur et/ou de l'inclinaison du châssis d'engin par rapport à la surface de sol, et
dans lequel deux zones d'image arrière qui se chevauchent sont acquises avec deux caméras arrière dans la direction de travail qui sont agencées des deux côtés du dispositif de transport, la direction de travailla direction de travaildes zones d'image gauche et droite sont acquises avec une caméra gauche au niveau du côté longitudinal gauche dans la direction de travail de l'engin de chantier et une caméra droite au niveau du côté longitudinal droit dans la direction de travail de l'engin de chantier, et une zone d'image avant est acquise avec une caméra avant.

14. Procédé selon la revendication 12 ou 13, **caractérisé en ce que** les sections d'image des zones d'image individuelles sont assemblées en une image globale dans la perspective à vol d'oiseau sensiblement rectangulaire.

15. Procédé selon l'une des revendications 12 à 14, **caractérisé en ce qu'**une section de l'image globale dans la perspective à vol d'oiseau symétrique par rapport aux côtés longitudinaux et/ou aux côtés transversaux du châssis d'engin est affichée.

16. Procédé selon la revendication 12, **caractérisé en ce qu'**en cas d'inclinaison transversale du châssis d'engin à partir d'une orientation parallèle à la surface de sol sur le côté gauche le tracé des joints gauches, avant et arrière de la section d'image latérale gauche, et/ou des joints droits, avant et arrière de la section d'image latérale droite est fixé de telle manière qu'avec une inclinaison croissante du châssis d'engin sur le côté gauche l'angle d'ouverture défini par les joints gauches diminue et l'angle d'ouverture défini par les joints droit augmente, et en cas d'inclinaison transversale du châssis d'engin à partir d'une orientation parallèle à la surface de sol sur le côté droit est fixé de telle manière qu'avec une inclinaison croissante du châssis d'engin sur le côté droit l'angle d'ouverture défini par les joints gauches augmente et l'angle d'ouverture défini par les joints droit diminue.

17. Procédé selon la revendication 12 ou 16, **caractérisé en ce que**
en cas d'inclinaison longitudinale du châssis d'engin vers l'avant à partir d'une orientation parallèle à la surface de sol, le tracé des joints avant est fixé de telle manière qu'avec une inclinaison croissante du châssis d'engin vers l'avant l'angle d'ouverture défini par les joints gauche et médian et l'angle d'ouverture défini par les joints droit et médian diminue, et le tracé des joints arrière est fixé de telle manière qu'avec une inclinaison croissante du châssis d'engin vers l'avant l'angle d'ouverture défini par les joints arrières, gauche et droit augmente et
qu'en cas d'inclinaison longitudinale du châssis d'engin vers l'arrière à partir d'une orientation parallèle à la surface de sol, le tracé des joints avant est fixé de telle manière qu'avec une inclinaison croissante du châssis d'engin vers l'arrière l'angle d'ouverture défini par les joints gauche et médian et l'angle d'ouverture défini par les joints droit et médian augmente, et le tracé des joints arrière est fixé de telle manière qu'avec une inclinaison croissante du châssis d'engin vers l'arrière l'angle d'ouverture défini par les joints arrière, gauche et droit diminue.
